# EUROPEAN PATENT SPECIFICATION

(11) **EP 3 531 386 B1**
(45) Date of publication and mention of the grant of the patent: **12.06.2024**
(21) Application number: 17863744.3
(22) Date of filing: 19.10.2017
(51) Int. Cl.: G08B 17/00, G06T 7/00, G08B 17/10, G08B 31/00, G08B 29/18

(54) **FIRE MONITORING SYSTEM**
FEUERÜBERWACHUNGSSYSTEM
SYSTÈME DE SURVEILLANCE D'INCENDIE

(30) Priority: 24.10.2016 JP 2016207848; 27.10.2016 JP 2016210241; 29.11.2016 JP 2016231241
(43) Date of publication of application: 28.08.2019
(73) Proprietor: Hochiki Corporation, Shinagawa-ku, Tokyo 141-8660 (JP)
(72) Inventor: EBATA, Hiromichi, Tokyo 141-8660 (JP)
(74) Representative: Körfer, Thomas
(86) International application number: PCT/JP2017/037830
(87) International publication number: WO 2018/079400

(56) References cited:
- EP-A1- 0 654 770
- DE-A1- 19 653 554
- JP-A- H06 325 270
- JP-A- 2000 132 763
- JP-A- 2004 064 714
- JP-A- 2004 294 423
- JP-A- 2007 280 167
- JP-A- 2010 097 430
- US-A1- 2006 017 578
- FRIZZI SEBASTIEN ET AL: "Convolutional neural network for video fire and smoke detection", IECON 2016 - 42ND ANNUAL CONFERENCE OF THE IEEE INDUSTRIAL ELECTRONICS SOCIETY, IEEE, 23 October 2016 (2016-10-23), pages 877-882, XP033033398, DOI: 10.1109/IECON.2016.7793196 [retrieved on 2016-12-21]

## Description

### Technical Field

The present invention relates to a fire monitoring system which, based upon an image in a monitor region captured by a sensor, such as a fire sensor or the like, and a monitor camera, determines a fire by using a neural network, and raises warning.

### Background Art

Conventionally, a system has been put into practical use in which by using a sensor for monitoring a specific physical amount, such as a smoke sensor, a heat sensor, or the like, a fire is detected.

On the other hand, conventionally, various devices and systems have been proposed in which by performing an imaging process on an image in a monitor region captured by a monitor camera, a fire detection is carried out.

In these fire monitoring systems, an early detection of a fire is important from viewpoints of an initial extinguish for an outbreak of fire and evacuation guidance.

For this reason, in a conventional device (Patent Document 1), reduction in transmittance or contrast, convergence of luminance to a specific value, reduction in luminance dispersion due to a narrowed luminance distribution range, changes in the average value of luminance due to smoke, reduction in the total amount of edges and an intensity increase of a low frequency band are induced as phenomena caused by smoke with a outbreak of fire from images, and by judging these factors systematically, detection of smoke can be carried out.

US 2006/0017578 A1 describes a flame detection system including a plurality of sensors. The plurality of sensors include a set of discrete optical radiation sensors responsive to flame as well as non-flame emissions. These sensors are sensitive to different wavelength of radiation such as infrared, ultraviolet etc.. A sensor data collection function collects analog sensor signals from the sensors and converts the sensor signals into digital form for processing by the digital signal processor. Validation algorithms are then applied to the sensor data, including signal pre-processing, Artificial Neural Network processing and post-processing to determine the sensor state.

Frizzi Sebastian et al. ("Convolution neuronal network for video fire and smoke detection"; IECON 2016 - 42nd annual converence of the IEEE Electronic Society, IEEE, 23 October 2016, pages 877 - 882, XP033033398, DOI:
10.11096/IECON.2016.7793196) describe a video analysis for fire detection. The related method is based on a convolutional neural network (CNN) for identifying fire in videos. The method uses a nine layer CNN in order to get a fast classification. Herein, a color-image goes through successively two convolutional operations, a max pooling,
followed by two further convolutional layers and two further max pooling operations of the CNN. A following seventh layer and eight layer are fully connected. The output of the last fully connected layer is fed to a three way Softmax to produce a distribution over three class labels, a negative, a fire and a smoke label. The classification to decide whether an image contains fire or/and smoke is based on a training sequence using a collection of images labeled. The training set is composed of 27919 RGB labeled images of size 64x64 pixels. The training set consists of 8915 images labeled for smoke, 7257 images labeled for fire and 11752 images labeled negative representing no fire or smoke. The training data has been realized with a computer using a stochastic gradient descent with mini-batches.

### Related Art Documents

### Patent documents

Patent document 1: JP-A No. 2008-046916
Patent document 2: JP-A No. 7-245757
Patent document 3: JP-A No. 2010-238028
Patent document 4: JP-A No. 6-325270

### Disclosure of Invention

### Problems to be Solved by the Invention

However, in the case of a fire detection system using a sensor for monitoring a specific physical amount, even when a monitoring criteria is satisfied by a phenomenon not caused by a fire, the phenomenon is recognized as an outbreak of fire, causing a problem in which fire detection cannot be carried out correctly.

Moreover, in the case of the conventional fire monitoring system for detecting a fire from an image of smoke caused by the fire, characteristic amounts, such as transmittance, contrast, edge or the like in the image of the smoke, have to be preliminarily determined and by processing the image captured by a monitor camera, characteristics caused by the smoke have to be generated; however, there are various kinds in various states of occurrence circumstances of smoke due to a fire and it is extremely difficult to find out what characteristics exist as smoke among those circumstances, and since a decisive characteristic is hardly found out, such a fire monitoring system as to output fire warning by determining smoke due to a fire from a monitored image with high precision has not yet been put into practical use.

On the other hand, in recent years, for example, a technology has been proposed in which labels are put onto a large number of images of cats and dogs, and these are learned by a multi-layer-type neural network with a convolutional neural network so that a so-called deep learning process is carried out, and a new image is presented to the multi-layer-type neural network that has been subjected to the learning so as to determine whether it is a cat or a dog.

Moreover, it has been examined that the deep learning is not only applied to an image analysis, but also applied to a natural language processing, an action analysis or the like.

In the case when such a multi-layer-type neural network is installed in a determination device that uses a physical amount obtained from a sensor that is typically represented by a fire sensor and an image in a monitor region captured by a monitor camera as input information and determines a fire based upon the input information, and at learning time, a large number of pieces of input information at the time of a fire as well as at the time of non-fire state are prepared, and by subjecting the multi-layer-type neural network to the learning process, while at the time of monitoring, by inputting the input information to the multi-layer-type neural network that has been subjected to the learning process, it becomes possible to configure a fire monitoring system that can estimate whether a fire occurs or not from its output with high precision and allows warning to be outputted.

In this case, in a manufacturing stage of the fire monitoring system, a learning process of the multi-layer-type neural network is carried out by using a large number of pieces of input information at the time of a fire as well as at the time of a non-fire state preliminarily prepared as supervised learning information, and a determination device provided with the multi-layer-type neural network that has been subjected to the learning process is installed in a facility to be monitored, and by inputting sensor data of a fire sensor or the like installed in the monitor region and images captured by a camera into the determination device, a fire monitoring process can be carried out.

However, the learning in the multi-layer-type neural network carried out in the manufacturing stage is learning in which not data acquired in the actual monitor region, but input information prepared standardly is used, and in the case when an actual physical amount and a monitor image inputted by a sensor or a monitor camera in actual site are inputted, possibility remains in that a fire cannot be estimated with sufficiently high accuracy.

In order to solve this problem, after installing a multi-layer-type neural network of a determination device that has been subjected to learning by using images standardly prepared in its manufacturing stage in a monitor region, the multi-layer-type neural network may be again subjected to learning by using fire images and non-fire images acquired in the monitor region; however, since the frequency of occurrence of a fire in the installation site is extremely low, it is difficult to acquire images of fire required for the learning, and since it takes time for acquiring non-fire images that cause erroneous warnings, a problem to be solved remains in that a large number of fire and non-fire learning images required for enhancing the detection accuracy in the multi-layer-type neural network need to be acquired.

Moreover, situations at normal time and at abnormal time are different depending on actual site environments. In the case when learning is carried out under a single site environment, the detection accuracy for abnormality might be lowered because of changes in the site environment. In order to form an abnormality detector capable of dealing with changes in the site environment, by carrying out learning in various site environments, learning for detecting common factors for abnormality is required.

The object of the present invention is to provide a fire monitoring system in which, in cooperation with a fire alarm facility provided with a fire sensor, by using input information at the time of fire and/or at the time of non-fire state suitable for the monitor region, a multi-layter-type neural network is efficiently subjected to learning so that the determination accuracy of fire can be enhanced.

Moreover, another object of the present invention is to provide a fire monitoring system in which by forming a large number of learning images of fire and non-fire state corresponding to the monitor region easily and appropriately, the multi-layer-type neural network is efficiently subjected to learning so that the detection accuracy of fire can be improved.

Furthermore, the object of the present invention is to provide a fire monitoring system in which, in cooperation with an abnormality monitoring facility and a server installed through a network, by using input information at the time of abnormality and/or non-abnormal state appropriately corresponding to a monitor region, a multi-layter-type neural network is efficiently subjected to learning so that it becomes possible to appropriately deal with changes in environments and also to enhance the determination accuracy of abnormality.

The invention is set out in the appended set of claims.

### Means to Solve the Problems

### (Fire Monitoring System)

The present invention relates to a fire monitoring as defined in claim 1. It has a fire detector constituted by a multi-layer-type neural network for detecting a fire based upon input information and a learning control part that subjects the fire detector to learning through deep learning.

### (Generation of Fire Learning Image)

The fire monitoring system further includes: a normal image storage part for storing images in a normal state in the monitor region, and a learning image generation control part that generates an image at the time of an outbreak of fire in the monitor region based upon the normal monitoring image as a fire learning image, and the learning control part inputs the fire learning image generated in the learning image generation control part to the fire detector so as to be subjected to deep learning.

### (Composition between Normal Monitoring Image and Fire Smoke Image)

Moreover, a fire smoke image storage part for storing preliminarily generated fire smoke images, and the learning image generation control part composes a fire smoke image with a normal monitoring image to generate a fire learning image.

### (Generation of Time Series Based Fire Learning Image)

The fire smoke image storage part stores a plurality of fire smoke images that change in time series, and the learning image generation control part composes the plural fire smoke images that change in time series respectively with a normal monitor image so that a plurality of fire learning images that change in time series are generated.

### (Generation of Fire Learning Image by Manual Selection of Fire Source Object)

The learning image generation control part generates a fire learning image that is composed so as to make the smoke generation point of a fire smoke image coincident with a fire source object selected by a manual operation in a normal monitoring image.

### (Generation of Fire Learning Image based upon Smoke Types corresponding to Materials of Fire Source Object)

The fire smoke image storage part stores a plurality of kinds of fire smoke images having different smoke types in associated with materials of fire source objects, and based upon selection operations of materials for fire source objects, the learning image generation control part generates a fire learning image by composing a fire smoke image of smoke type corresponding to the selected material with a normal monitoring image.

### (Generation of Fire Learning Image based upon Automatic Detection of Fire Source Object)

The learning image generation control part detects one or a plurality of fire source objects contained in a normal monitoring image, and generates a fire learning image by composing a smoke generation point of a fire smoke image so as to be positioned at the detected fire source object.

### (Generation of Fire Learning Image based upon Smoke Types corresponding to Automatic Detection of Materials of Fire Source Object)

The fire smoke image storage part stores a plurality of kinds of fire smoke images having different smoke types in associated with materials of fire source objects, and the learning image generation control part detects a material for a fire source object, and generates a learning image by composing a fire smoke image of smoke type corresponding to the detected material with a normal monitoring image.

### (Generation of Fire Learning Image corresponding to Position of Fire Source Object)

The learning image generation control part generates a fire learning image by controlling the size and/or angle of a fire smoke image to be composed in accordance with the position of a fire source object.

### (Learning and Detection of Non-Fire)

The learning image generation control part further generates an image at the time of a non-fire state in the monitor region based upon a normal monitoring image as a non-fire learning image, and the learning control part inputs the non-fire learning image generated in the learning image generation control part to the fire detector so as to be subjected to learning by deep learning.

### (Generation of Non-Fire Learning Image)

Moreover, a non-fire smoke image storage part for storing preliminarily generated non-fire smoke images, and the learning image generation control part generates a non-fire learning image by composing the non-fire smoke image with a normal monitoring image.

### (Generation of Specific Non-Fire Learning Image)

The non-fire smoke image storage part stores at least any one of a cooking steam image caused by cooking, a cooking smoke image caused by cooking, a smoking image caused by smoking and an illumination lighting image caused by lighting of an illumination equipment, and the learning image generation control part generates a non-fire learning image by composing a cooking steam image, a cooking smoke image, a smoking image and/or an illumination lighting image with a normal monitoring image.

### (Generation of Non-Fire Learning Image in Time Series)

The non-fire smoke image storage part stores at least any one of a plurality of cooking steam images, cooking smoke images and smoking images that change in time series, and the learning image generation control part generates a non-fire learning image by composing cooking a steam image, a cooking smoke image and/or a smoking image that changes in time series with a normal monitoring image.

### (Generation of Non-Fire Learning Image corresponding to Position of Smoke Generation Point)

The learning image generation control part generates a non-fire learning image by controlling the size and/or angle of a non-fire smoke image to be composed in accordance with a position of the composing end of the non-fire smoke image.

The examples, aspects and embodiments described in the following paragraphs [0033]-[0100] are not according to the invention and are present for illustration purposes only.

### (Input Information)

A storage part for storing a physical amount detected by a sensor and/or an image in a monitor region image-captured by an image-capturing part, as input information is installed, and the learning control part subjects the fire detector to learning by using the input information stored in the storage part as learning information of the fire detector, and after the learning, by inputting the input information to the fire detector, a fire is detected.

### (Cooperation with Receiver)

Based upon the results of fire monitoring by a receiver to which a fire sensor installed in a monitor region is connected, the learning control part takes in the input information stored in the storage part as learning information.

### (Fire Learning by Input Information corresponding to Sensor giving Fire Alarm)

In the case when a signal caused by fire alarm of the fire sensor is inputted, the learning control part reads out input information corresponding to the fire sensor that gave the fire alarm from the storage part, of input information from a predetermined time before to the input time of the signal by the fire alarm, and inputs the information to the fire detector as learning information so as to subject the neural network to learning.

### (Fire Learning at the time of Fire Decision by Input Information from Predetermined Time before Fire Alarm)

In the case when a fire decision transfer informing signal based upon a fire decision operation is inputted after the input of a signal based upon fire warning by the fire sensor, the learning control part reads out input information from a predetermined time before to the input time of the fire transfer informing signal from the storage part, and inputs the information to the fire detector as learning information so as to subject the neural network to learning.

### (Fire Learning by Input Information from Exceeding of Fire Sign Level)

The fire sensor detects temperature or smoke concentration and sends the detected analog value so as to determine a fire, and in the case when a fire is detected by a signal of the fire sensor, the learning control part reads out input information from the time when the detected analog value has exceeded a predetermined fire sign level that is lower than a fire determination level to the time of a fire detection from the storage part, and inputs the information to the fire detector as learning information so as to subject the neural network to learning.

### (Non-Fire Learning at the time of Recovery by Input Information from predetermined time before Fire Alarm)

In the case when after a fire transfer informing signal based upon fire alarm of the fire sensor by the receiver has been inputted, a recovery transfer informing signal based upon a recovery operation is inputted, the learning control part reads out input information from a predetermined time before to the input time of the fire transfer informing signal from the storage part, and inputs the information to the fire detector as non-fire learning information so as to subject the neural network to learning.

### (Non-Fire Learning at the time of Recovery by Input Information from Exceeding Fire Sign Level)

The fire sensor detects a temperature or a smoke concentration, and sends the detected analog value so as to determine a fire, and in the case when after a fire transfer informing signal based upon fire alarm of the sensor by the receiver has been inputted, a recovery transfer informing signal based upon a recovery fixed operation is inputted, the learning control part reads out input information from the time when the detected analog value has exceeded a predetermined fire sign level that is lower than a fire determination level to the inputted time of the fire transfer informing signal from the storage part, and inputs the information to the fire detector as non-fire learning information so as to subject the neural network to learning.

### (Initialization Learning by Normal Monitoring Input Information in Monitor Region)

The learning control part reads out input information stored in the storage device in a normal monitoring state of the fire alarm facility, and inputs the information to the multi-layer-type neural network as non-fire learning information so as to be subjected to initialization learning.

### (Timing of Initialization Learning)

The timing of initialization learning includes any one or more of a case when, upon starting up the device, a predetermined operation is carried out, a case when no change substantially occurs in input information and a case where a predetermined operation is carried out every interval of predetermined time, and the time of the first operation changes.

### (Clarifying Fire Determination Basis)

The fire detector displays a reason by which an outbreak of fire is determined in addition to the detection of a fire.

### (FireMonitoring System in cooperation with Server)

A fire monitoring system of another mode which is not a part of the present invention is characterized by having a fire detector that is constituted by a multi-layer-type neural network, and detects a fire in a monitor region based upon input information, and a learning information collecting part that is formed in a fire detector, and collects input information as learning information and uploads the information to a server, as well as a learning control part that is formed in the server, learns the multi-layer-type neural network having the same configuration as that of the fire detector by the learning information uploaded from the learning information collecting part, and downloads the multi-layer-type neural network that has been subjected to learning to the fire detector so as to be uploaded.

### (Learning in Similar Environment)

The learning of the multi-layer-type neural network is characterized by being carried out for each input information of the fire detector in similar environment.

### (Learning Information)

Based upon monitored results by the receiver that stores input information in a storage part, and monitors a fire by the input information, the learning information collecting part reads out the input information stored in the storage part as learning information, and uploads it to a server so as to subject the multi-layer-type neural network to learning.

### (Generation of Fire Learning Information prior to Predetermined Time before Fire Alarm)

In the case when after the input of a fire transfer informing signal based upon fire alarm of a fire sensor by a fire receiver, a fire decision transfer informing signal is inputted based upon a fire decision operation, the learning information collecting part reads out the inputted information from predetermined time before to the input time of the fire transfer informing signal as fire learning information from the above-mentioned storage part, and uploads the fire learning information to a server so as to subject the multi-layer-time neural network to learning.

### (Generation of Fire Learning Information after exceeding Fire Sign Level)

The fire sensor detects temperature or smoke concentration, and sends the detected analog value to the fire receiver so as to determine a fire, and in the case when after the input of a fire transfer informing signal based upon fire alarm of a fire sensor by a fire receiver, a fire decision transfer informing signal is inputted based upon a fire decision operation, the learning information collecting part reads out the inputted information from the time when the detected analog value has exceeded a predetermined fire sign level that is lower than a fire determination level to the input time of the fire transfer informing signal as fire learning information from the storage part, and uploads the fire learning information to a server so as to subject the multi-layer-type neural network to learning.

### (Collection of Non-Fire Learning Information prior to Predetermined Time before Fire Warning)

In the case when after the input of a fire transfer informing signal based upon fire warning of a fire sensor by a fire receiver, a recovery transfer informing signal is inputted based upon a recovery operation, the learning control part reads out the inputted information from predetermined time before to the input time of the fire transfer informing signal as non-fire learning information from the aforementioned image recording part, and uploads the non-fire learning information to the above-mentioned server so as to subject the multi-layer-time neural network to learning.

### (Collection of Non-Fire Learning Information after exceeding Fire Sign Level)

The fire sensor detects temperature or smoke concentration, and sends the detected analog value to the receiver so as to determine a fire, and in the case when after the input of a fire transfer informing signal based upon fire alarm of a fire sensor by a fire receiver, a recovery transfer informing signal is inputted based upon a recovery operation, the learning control part reads out the inputted information from the time when the detected analog value has exceeded a predetermined fire sign level that is lower than a fire determination level to the input time of the fire transfer informing signal from the storage part as non-fire learning information, and uploads the non-fire learning information to a server so as to subject the multi-layer-type neural network to learning.

### (Initialization Learning by Normal Monitoring Image in Monitor Region)

The learning information collecting part reads out input information stored in the storage part in a normal monitoring state as non-fire learning information, and uploads the non-fire learning information to a server so as to subject the multi-layer-type neural network to learning.

### (Another Mode of Fire Monitoring System in cooperation with Server)

Moreover, a fire monitoring system of another mode which is not a part of the present invention is characterized by having a plurality of fire detectors each of which is constituted by a multi-layer-type neural network, and detects a fire in a monitor region based upon input information, and a learning control part that is formed in a server, and by downloading learning information uploaded from the above-mentioned learning information collecting part of one fire detector among the plural fire detectors to another fire detector, subjects the multi-layer-type neural network of the other fire detector to learning.

### (Functional Configuration of Multi-Layer-Type Neural Network)

The multi-layer-type neural network is constituted by a characteristic extraction part and a recognition part, and the characteristic extraction part is prepared as a convolutional neural network provided with a plurality of convolutional layers to which input information is inputted and by which characteristic information having extracted characteristics of the input information is generated, and the recognition part is prepared as a neural network having a plurality of total-bond layers to which characteristic information outputted from the convolutional neural network is inputted and from which a fire characteristic value is outputted.

### (Learning by Back Propagation)

The learning control part subjects the multi-layer-type neural network of the learning control part to learning by using back propagation (error back propagation) that is derived from an error between a value that is outputted when fire learning information or non-fire learning information is inputted to a multi-layer-type neural network of a fire detector and an expected value as a predetermined value.

### Effects of the Invention

### (Effects of Fire Monitoring System)

The fire monitoring system of the present invention is provided with a fire detector constituted by a multi-layer-type neural network for detecting a fire based upon input information and a learning control part for subjecting the above-mentioned fire detector to deep learning; therefore, even in the case of a sensor output and an image in a monitor region by which an artificial analysis fails to estimate whether it is a fire or a non-fire state, a fire can be estimated with high accuracy, thereby making it possible to give warning.

### (Effects of Generation of Fire Learning Image)

The fire monitoring system further includes: a normal image storage part for storing images in a normal state in the monitor region, and a learning image generation control part that generates an image at the time of an outbreak of fire in the monitor region based upon the normal monitoring image as a fire learning image, and the learning control part inputs the fire learning image generated in the learning image generation control part to the fire detector so as to be subjected to deep learning; therefore, by using a fire learning image that is equivalent to an actual case in which a fire occurs in the monitoring site, the multi-layer-type neural network of the fire detector is subjected to learning so that the detection accuracy for a fire in the case of using the inputted monitoring image can be improved.

### (Effects of Composition between Normal Monitoring Image and Fire Smoke Image)

Moreover, a fire smoke image storage part for storing preliminarily generated fire smoke images is installed, and the learning image generation control part is designed to compose a fire smoke image with a normal monitoring image to generate a fire learning image so that by composing a large number of fire smoke images showing smoke in accordance with preliminarily prepared fire without a background, a large number of fire learning images that are equivalent to actual cases, each showing a fire occurring in the monitoring site, can be easily generated appropriately so that the detection accuracy for a fire can be improved.

### (Effects of Generation of Time-Series Fire Learning Image)

Moreover, the fire smoke image storage part stores a plurality of fire smoke images that change in time series, and the learning image generation control part is designed to compose the respective plural fire images that change in time series with normal monitoring images to generate a plurality of fire learning images that change in time series; therefore, by composing the plural fire smoke images smokes of which expand as time elapses with normal monitoring images, fire smoke images that change in time series can be easily generated.

For example, changes in time of smoke derived from fire tests or the like are image-captured by a monitor camera at 30 frames/second and recorded, and by reading out recorded images of, for example, 5 minutes from the start of a fire experiment with the background thereof being removed, 9000 sheets of fire smoke images can be obtained, and by composing these with normal monitoring images at monitored site image-captured by a monitor camera, a sufficient number, such as 9000 sheets, of fire learning images can be easily generated; thus, by subjecting the multi-layer-type neural network of the fire detector to learning of these, the detection accuracy of a fire in the case of inputting a monitoring image can be improved.

### (Effects of Generation of Fire Learning Image by Manual Selection of Fire Source Object)

Moreover, the learning image generation control part is designed to generate a fire learning image that is composed so as to make the smoke generation point of a fire smoke image coincident with a fire source object selected by a manual operation in a normal monitoring image; therefore, a normal monitoring image of a monitoring site image-captured by a monitoring camera is displayed on a monitor screen or the like, and by selecting any one of a dust bin, an ashtray, a heating appliance, an electrical outlet or the like that is assumed to be a fire source by using a manual operation in a normal monitoring screen as a fire source object, a fire learning image that is composed so as to allow a smoke generation point of the fire smoke image to be positioned on the selected fire source object is generated so that by artificially generating a fire learning image corresponding to a case in which a fire actually occurs in the monitoring site, the multi-layer-type neural network of the fire detector is subjected to the learning so that the detection accuracy of a fire in the case of inputting a monitoring image can be improved.

### (Effects of Generation of Fire Learning Image based upon Smoke Types corresponding to Materials of Fire Source Object)

Moreover, the fire smoke image storage part stores a plurality of kinds of fire smoke images having different smoke types in associated with materials of fire source objects, and based upon selection operations of materials for fire source objects, the learning image generation control part is designed to generate a learning image by composing a fire smoke image of smoke type corresponding to the selected material with a normal monitoring image; thus, since smokes caused by a fire have, for example, different colors depending on materials for a fire source object, such as white smoke from timber, cloth, paper or the like, and black smoke from synthesized resin or the like, fire smoke images of different types corresponding to materials for burning objects are preliminarily prepared and stored, and in the case of selecting a fire source target in a normal monitoring image by a manual operation, by also selecting its material, a smoke type corresponding to the selected material, such as, for example, in the case of a timber, a fire smoke image of white smoke is selected, and a fire learning image is generated by combining this with a normal monitoring image, or in the case of a synthesized resin as the material, a fire smoke image of black smoke is selected, and a fire learning image is generated by combining this with a normal monitoring image; thus, by using the fire learning image generated in this manner, the multi-layer-type neural network of the fire detector is subjected to learning so that even in the case when smoke of a different type is generated depending on the material for the fire source object, a fire can be detected with high accuracy from the inputted monitoring image.

### (Effects of Generation of Fire Learning Image based upon Automatic Detection of Fire Source Object)

Furthermore, the learning image generation control part is designed to detect one or a plurality of fire source objects contained in a normal monitoring image so as to generate a fire learning image by composing a smoke generation point of a fire smoke image so as to be positioned at the detected fire source object; therefore, a fire source object that might form a fire source is automatically detected in a normal monitoring screen, and a fire learning image composed so as to make a smoke generation point of a fire smoke image coincident with the detected fire source object can be easily generated.

Such an automatic detection for a fire source object from a normal monitoring image can be realized, for example, by using an R-CNN (Regions with Convolutional Neural Network) method known as a detection method of an object using a neural network.

### (Effects of Generation of Fire Learning Image based upon Smoke Types corresponding to Automatic Detection of Materials of Fire Source Object)

Moreover, the fire smoke image storage part stores a plurality of kinds of fire smoke images having different smoke types in associated with materials of fire source objects, and the learning image generation control part is designed to detect a material for a fire source object so as to generate a fire learning image by composing a fire smoke image of smoke type corresponding to the detected material with a normal monitoring image; therefore, in addition to an automatic detection of a fire source object that might cause a fire source from the inside of a normal monitoring screen, by automatically detecting the material for the detected fire source object, for example, by selecting a smoke type corresponding to the material, such as, for example, in the case of a timber, a fire smoke image of white smoke, and in the case of a synthesized resin as the material, a fire smoke image of black smoke, and by also combining this with a normal monitoring image, a fire learning image can be easily generated, and by using the fire learning image thus generated, the multi-layer-type neural network of the fire detector is subjected to learning; thus, even when smoke of a different type is generated due to the material for the fire source object, a fire can be detected with high accuracy from the inputted monitoring image.

### (Effects of Generation of Fire Learning Image corresponding to Position of Fire Source Object)

Furthermore, the learning image generation control part is designed to generate a fire learning image by controlling the size and/or angle of a fire smoke image to be composed in accordance with the position of a fire source object; therefore, by making the fire smoke image smaller as the fire source object becomes farther from the monitor camera, while by making the fire smoke image larger as it becomes closer, a fire learning image having an appropriate size corresponding to the position of the monitor camera can be generated.

### (Effects of Learning and Detection of Non-Fire)

Moreover, the learning image generation control part further generates an image at the time of a non-fire state in the monitor region as a non-fire learning image based upon a normal monitoring image, and the learning control part inputs the non-fire learning image generated in the learning image generation control part to the fire detector so as to be subjected to learning by deep learning; thus, more specifically, a non-fire smoke image storage part for storing a preliminarily generated non-fire smoke image is installed, and the learning image generation control part is designed to generate a non-fire learning image by composing the non-fire smoke image with a normal monitoring image with a normal monitoring image; therefore, by composing a large number of preliminarily prepared non-fire smoke images showing smoke similar to a fire caused by non-fire states without back grounds with a normal monitoring image captured by a monitor camera in the monitor region, a large number of non-fire learning images that are equivalent to cases in which states corresponding to smoke similar to a fire caused by non-fire states in the monitor site can be easily generated appropriately so that by using the non-fire learning images generated in this manner, the multi-layer-type neural network of the fire detector is subjected to learning; thus, it becomes possible to prevent erroneous detection by a non-fire state in the case of inputting a monitoring image, and consequently to improve the detection accuracy of a fire.

### (Effects of Generationof Non-Fire Learning Image)

Moreover, the non-fire smoke image storage part stores at least any one of a cooking steam image caused by cooking, a cooking smoke image caused by cooking, a smoking image caused by smoking and an illumination lighting image caused by lighting of an illumination equipment, and the learning image generation control part is designed to generate a non-fire learning image by composing a cooking steam image, a cooking smoke image, a smoking image and/or an illumination lighting image with a normal monitoring image; therefore, by composing a cooking steam image, a cooking smoke image, a smoking image and/or an illumination lighting image showing smoke similar to a fire caused by non-fire states without back grounds that are preliminarily prepared with a normal monitoring image captured by a monitor camera in the monitor region, a large number of non-fire learning images, such as a cooking steam image, a cooking smoke image, a smoking image or the like, that cause an erroneous warning can be easily generate appropriately so that by using the non-fire learning images generated in this manner, the multi-layer-type neural network of the fire detector is subjected to learning; thus, it becomes possible to prevent erroneous detection by a non-fire state in the case of inputting a monitoring image, and consequently to improve the detection accuracy of a fire.

### (Effects of Generation of Time-Series Non-Fire Learning Image)

The non-fire smoke image storage part stores at least any one of a plurality of cooking steam images, cooking smoke images and smoking images that change in time series, and the learning image generation control part generates a non-fire learning image by composing a cooking steam image, a cooking smoke image and/or a smoking image that changes in time series with a normal monitoring image; therefore, a large number of non-fire smoke images derived from cooking steam, cooking smoke and/or smoking in which smoke changes as time elapses can be easily generated so that the multi-layer-type neural network of the fire detector is subjected to learning; thus, it becomes possible to prevent erroneous detection by a non-fire state in the case of inputting a monitoring image, and consequently to improve the detection accuracy of a fire.

### (Effects of Generation of Non-Fire Learning Image corresponding to Position of Smoke Generation Point)

Furthermore, the learning image generation control part generates a non-fire learning image by controlling the size and/or angle of a non-fire smoke image to be composed in accordance with a position of the composing end of the non-fire smoke image; therefore, by making the non-fire smoke image smaller as the fire source object becomes farther from the monitor camera, while by making the non-fire smoke image larger as it becomes closer, a non-fire learning image having an appropriate size corresponding to the position of the monitor camera can be generated.

### (Effects of Input Information)

Moreover, a storage part for storing a physical amount detected by a sensor and/or an image in a monitor region image-captured by an image-capturing part as input information is installed, and the learning control part subjects the fire detector to learning by using the input information stored in the storage part as learning information of the fire detector, and after the learning, by inputting the input information to the fire detector, a fire is detected; therefore, a large number of pieces of information are acquired from the physical amount stored in the storage part and detected by the sensor and the input information such as an image or the like in a monitor region captured by an image-capturing part, and by using the information, the multi-layer-type neural network of the fire detector can be efficiently subjected to learning, and thereafter, by inputting the input information to the fire detector that has been subjected to the learning, a fire can be estimated with high accuracy, thereby making it possible to give warning.

### (Effects in cooperation with Receiver)

Moreover, based upon the results of fire monitoring by a receiver to which the fire sensor installed in a monitor region is connected, the learning control part is designed to take in the input information stored in the storage part as learning information; therefore, the multi-layer-type neural network of the fire detector, which is subjected to learning by using standard fire and non-fire state images in a manufacturing stage, for example, in the case when fire warning is outputted based upon the result of fire monitoring by the receiver of the fire alarm facility, images recorded in the image recording device at that time are read out as fire images, and the multi-layer-type neural network is subjected to learning by using the images, while, when although fire warning is given, it is found to be the non-fire state, images recorded in the image recording device at that time are read out as non-fire images, and the multi-layer-type neural network is subjected to learning by using the images; thus, the learning can be efficiently carried out by using images of a fire and a non-fire state corresponding to the monitor region in which monitoring is actually carried out by a monitor camera as the image-capturing part so that from the monitoring image image-captured by the monitor camera, a fire can be estimated with high accuracy, thereby making it possible to give warning.

This point is applicable in the same manner to the physical amounts of the temperature, smoke concentration or the like detected by the sensor, and a fire can be estimated from the sensor detected signal with high accuracy, thereby making it possible to give warning.

### (Fire Learning by Input Information corresponding to Sensor that gives Fire Alarm)

In the case when a signal derived from fire alarm from the fire sensor is inputted, the learning control part reads out input information corresponding to the fire sensor that gave the fire alarm from the storage part, of input information from a predetermined time before to the input time of the signal by the fire warning, and inputs the information to the fire detector as learning information so as to subject the neural network to learning; therefore, it is possible to obtain the input information at the occurrence position of a fire as learning data, and consequently to automatically obtain learning data.

In the case when the sensor data of the fire sensor or the like is used as the input information, that is, for example, when sensor data from 5 minutes before the fire alarm is read from the storage part and used so as to be learned as the sensor data for a fire, supposing that sensor data is detected at predetermined time interval, for example, every 5 seconds, sensor data of 60 sets can be obtained. Moreover, in the case when images of the monitor camera are used as input information, for example, in the case when images 5 minutes before fire warning are read out from the image recording device, and used as learning images for a fire, supposing that record images are recorded at 30 frames/second, images of 9000 sheets are obtained from the recorded images of 5 minutes. As described above, by fire alarm from the fire sensor at one time, a learning process by using a plurality of pieces of input information corresponding to the fire sensor can be easily realized so that by estimating a fire with higher accuracy from the input information, warning can be given.

### (Fire Learning at the time of Fire Decision by Input Information from Predetermined time before Fire Alarm)

Moreover, in the case when after a signal has been inputted by fire alarm of a fire sensor, a fire decision transfer informing signal based upon a fire decision operation is inputted, the learning control part reads out input information from predetermined time before to the input time of a fire transfer informing signal from the storage part, and inputs the information to the fire detector as learning information so as to subject the neural network to learning; therefore, since the learning is carried out by using the input information in a state where a fire is actually happening as the input information at the time of a fire, it is not necessary to take time as to find out whether the learning data relates to a fire or a non-fire state so that the learning can be performed by using learning data without any error.

### (Fire Learning by Input Information from exceeding Fire Sign Level)

Moreover, the fire sensor detects temperature or smoke concentration and sends the detected analog value so as to determine a fire; therefore, in the case when a fire is detected by a signal of the fire sensor, the learning control part reads out input information from the time when the detected analog value has exceeded a predetermined fire sign level that is lower than a fire determination level to the time of a fire detection from the storage part so as to subject the neural network to learning; thus, since input information from the time when the temperature or smoke concentration has reached a predetermined fire sign level showing a sign of a fire that is lower than a fire determination level is read from the storage part and learned, a large number of pieces of information from the initial stage of a fire up to the determination of a fire can be read as input information for a fire and learned, thereby making it possible to detect a sign of a fire.

### (Non-Fire Learning at the time of Recovery by Input Information predetermined time before Fire Warning)

In the case when after a fire transfer informing signal based upon fire warning of the fire sensor by the receiver has been inputted, a recovery transfer informing signal based upon a recovery operation is inputted, the learning control part reads out input information from a predetermined time before to the input time of the fire transfer informing signal from the storage part, and inputs the information to the fire detector as non-fire learning information so as to subject the neural network to learning; therefore, for example, in the case when input information from 5 minutes before the fire warning is read out from the storage part and learned as input information of non-fire state, since the input information in a state where no fire is happening positively can be learned as input information at the time of non-fire state, it is not necessary to take time as to find out whether the learning data relates to a fire or a non-fire state so that the learning can be performed by using learning data without any error.

### (Non-Fire Learning at the time of Recovery by Input Information from Exceeding Fire Sign Level)

Furthermore, the fire detector detects a temperature or a smoke concentration, and sends the detected analog value so as to determine a fire, and in the case when after a fire transfer informing signal based upon fire alarm of the fire sensor by the receiver has been inputted, a recovery transfer informing signal based upon a recovery fixed operation is inputted, the learning control part reads out input information from the time when the detected analog value has exceeded a predetermined fire sign level that is lower than a fire determination level to the inputted time of the fire transfer informing signal from the storage part, and inputs the information to the fire detector as non-fire learning information so as to subject the neural network to learning; therefore, even in the case when although the temperature or smoke concentration in the monitor region detected by the analog type fire sensor has reached a predetermined fire sign level showing a sign of a fire that is lower than the fire determination level, it is a non-fire state due to the increase of temperature or smoke concentration caused by a reason other than a fire, since input information in a non-fire state from the time when the fire sign level has been reached is learned as the input information at the non-fire state, a large number of pieces of input information from the initial stage to the decision as the non-fire state, that is, input information of non-fire state, can be read from the storage part and learned so that even in the non-fire state that might be considered as the sign of a fire, non-fire state can be estimated with higher accuracy, thereby making it possible to positively prevent erroneous fire warning.

### (Effects of Initialization Learning by Normal Monitoring Input Information in Monitor Region)

Moreover, the learning control part reads out input information in the monitor region stored in the storage part in a normal monitoring state of the fire alarm facility, and inputs the information to the multi-layer-type neural network as non-fire input information so as to be subjected to initialization learning; therefore, the estimation accuracy of non-fire state relative to the input information in the monitor region in a normal monitoring state can be improved so that learning can be carried out by the input information of a fire or the input information of a non-fire state in cooperation with the fire monitoring of the receiver, thereby making it possible to further improve the accuracy of estimation to a fire and a non-fire state in the multi-layer-type neural network.

### (Effects of Timing of Initialization Learning)

The timing of initialization learning is designed to include any one or more of cases when the device is started up, when a predetermined operation is carried out, when no change substantially occurs in input information and when a predetermined operation is carried out every interval of predetermined time and the time of the first operation changes; therefore, by carrying out the initialization learning upon starting up the device, the non-fire state in an installation environment can be learned, and by carrying out the initialization learning, when a predetermined operation is carried out, the non-fire state can be learned at a desired timing so that, for example, even when interior design is changed, the non-fire state can be learned at once. Moreover, by carrying out the initialization learning when there is substantially no change in sensor output/camera captured image, the non-fire state can be learned automatically in a state where the monitor region is positively stabilized, and moreover, by carrying out the initialization learning, every interval of predetermined time, with the time of the first operation being changed,that is, for example, by carrying out the timing of the initialization learning in a deviated manner for every predetermined time, the non-fire state can be learned while obtaining the learning data of the non-fire state at scattered times.

### (Effects of Clarifying Fire Determination Basis)

Moreover, since the fire detector is designed to display a reason by which an outbreak of fire is determined in addition to the detection of a fire, an image which is determined as a fire is displayed, for example, in a monitoring camera image, and moreover, by displaying a region having a high contribution rate to the fire determination in a highlighted manner, visual confirmation can be easily made about the region determined by the fire detector as a fire so that it is possible to easily determine whether or not a fire occurs actually, and consequently to give aid to appropriate judgment corresponding to a situation.

### (Effects of Functional Configuration of Multi-Layer-Type Neural Network)

The multi-layer-type neural network is constituted by a characteristic extraction part and a recognition part, and the characteristic extraction part is prepared as a convolutional neural network provided with a plurality of convolutional layers to which images in the monitor region are inputted and from which characteristic information having extracted characteristics of an image is generated, and the recognition part is prepared as a neural network having a plurality of total-bond layers to which the characteristic information outputted from the convolutional neural network is inputted and from which a characteristic value of an image is outputted; therefore, since the characteristic is automatically extracted by the convolutional neural network, without the necessity of such a pretreatment as to extract a characteristic of a fire input image, such as, for example, extraction of a contour or the like, from an input image in the monitor region, the characteristic of the input image can be extracted, and by using the succeeding recognition part, a fire can be estimated with high accuracy.

### (Effects of Fire Monitoring System in cooperation with Server)

A fire monitoring system of another mode which is not a part of the present invention is provided with a fire detector that is constituted by a multi-layer-type neural network, and detects a fire in a monitor region based upon input information, and a learning information collecting part that is formed in the fire detector, and collects input information as learning information and uploads the information to a server, as well as a learning control part that is formed in the server, subjects to learning the multi-layer-type neural network having the same configuration as that of the fire detector by the learning information uploaded from the learning information collecting part, and downloads the multi-layer-type neural network that has been subjected to learning to an abnormality detector so as to be updated; therefore, a physical amount detected by the sensor or an image captured by an image-capturing part is uploaded onto the server side as learning information so that a large number of pieces of learning information are automatically collected, and by using the large number of pieces of learning information thus collected, the multi-layer-type neural network on the server side is subjected to learning, and the multi-layer-type neural network that has been subjected to the learning is downloaded from the server so that the multi-layer-type neural network of an abnormality detector is updated so that the physical amount detected by the sensor or the image captured by the camera is inputted thereto, thereby making it possible to determine predetermined abnormality with high accuracy.

Moreover, learning images required for the learning of the multi-layer-type neural network carried out on the server side can be automatically collected so that the multi-layer-type neural network can be efficiently subjected to learning.

Furthermore, the multi-layer-type neural network to be used in the abnormality detector is subjected to learning by deep learning on the server side and updated so that even from a sensor output and an image in a monitor region that make an artificial analysis fail to determine, a predetermined abnormality can be estimated with high accuracy so as to give warning.

Moreover, without carrying out learning respectively on individual abnormality detectors, learning can be carried out on the single server, the amount of calculations required for the learning can be reduced. Furthermore, since it is only necessary to install an apparatus having calculation capability required for the learning on the server side, it is possible not to adopt an apparatus having high calculation capability on the abnormality detector side.

### (Effects of Learning in Similar Environment)

Moreover, since the learning of the multi-layer-type neural network is carried out on each input information of the abnormality detector under the similar environment, learning can be carried out so as to provide an abnormality detector in which the characteristic of an environment is taken into consideration. Depending on the environment of the monitor region, kinds of abnormality and the way how to abnormality expand are different, and when the environments are classified, for example, to warehouses, offices, stores and factories, abnormality detections in accordance with environments, such as intrusion or the like in the case of warehouses, fire in the case of offices, theft in the case of stores, accidents or the like in the case of factories, are required. Furthermore, with respect to fire or the like, there are differences as to what kind of fire tends to occur depending on environments. By providing an abnormality detector by taking the characteristic of the environment into consideration, it is possible to carry out an abnormality detection having high detection accuracy on abnormalities that tend to occur in the respective environments.

### (Effects of Learning Information)

Moreover, based upon monitored results by the receiver that stores input information in the storage part and monitors an abnormality by the input information, the learning information collecting part reads out the input information stored in the storage part as learning information, and uploads it to a server so as to subject the multi-layer- type neural network to learning; therefore, by acquiring a large number of pieces of learning information from the input information, such as the physical amount detected by the sensor stored in the storage part and the image or the like in the monitor region captured by the image-capturing part, the multi-layer-type neural network to be used in the abnormality detector can be efficiently subjected to learning on the server side, and thereafter, by inputting the input information to the abnormality detector that has been subjected to the learning, abnormality can be estimated with high accuracy, thereby making it possible to give warning.

### (Effects of Fire Monitoring)

Moreover, the learning information collecting part is designed so that based upon monitoring results by the fire receiver that monitors a fire by the fire sensor, by reading out input information stored in the storage part as learning information, it uploads the information to the server so as to subject the multi-layer-type neural network to learning; therefore, even from a sensor output and an image in a monitor region that makes an artificial analysis fail to estimate whether it is a fire or a non-fire state, a fire can be estimated with high accuracy so as to give warning.

### (Effects of Generation of Fire Information predetermined time before Fire Alarm)

Moreover, in the case when a fire decision transfer informing signal basedupon a fire decision operation is inputted after the input of a fire transfer informing signal based upon fire alarm of the fire sensor by the fire receiver, the learning information collecting part reads out input information from a predetermined time before to the input time of the fire transfer informing signal from the storage part as fire learning information, and uploads the fire learning information to the server so as to subject the multi-layer-type neural network to learning; therefore, for example, in the case when images from 5 minutes before fire alarm are read out from the recording device and the images are collected in the server as fire learning information, supposing that the recorded images are recorded at 30 frames/second, images of 9000 sheets are obtained from the recorded images of 5 minutes so that learning by the use of a large number of pieces of fire learning information can be easily realized, and by downloading the multi-layer-type neural network that has subjected to the learning to the fire detector on the fire alarm facility side, a fire can be estimated with high accuracy from the monitoring images image-captured by the monitoring camera so as to give warning.

These effects can be obtained in the same manner as in the physical amounts such as temperature, smoke concentration or the like detected by the sensor, and by estimating a fire with high accuracy from the detection signal of the sensor, warning can be given.

### (Effects of Generation of Fire Learning Information from Exceeding of Fire Sign Level)

Moreover, the fire sensor detects temperature or smoke concentration and sends the detected analog value to the fire receiver so as to determine a fire, and in the case when after a fire transfer informing signal based upon fire alarm from the fire sensor by the fire receiver has been inputted, a fire decision transfer informing signal based upon a fire decision operation is inputted, the learning information correcting part reads out input information from the time when the detected analog value has exceeded a predetermined fire sign level that is lower than a fire determination level to the input time of the fire transfer informing signal as fire learning information from the storage part, and uploads the fire learning information to the server so as to subject the multi-layer-type neural network to learning; therefore, since the fire learning information from the time at which the temperature and smoke concentration in the monitor region detected by the analog type fire sensor have reached a predetermined fire sign level that gives a sign of a fire that is lower than the fire decision level is read out from the storage part and since the information is uploaded to the server so as to be learned, a large number of pieces of learning information from the initial stage of a fire to the decision of a fire can be collected and learned, and by downloading the multi-layer-type neural network that has been subjected to the learning to the determination device on the fire alarm facility side, a fire can be estimated with high accuracy from the sensor data of the fire sensor or the like and the monitoring images image-captured by the monitoring camera so as to give warning.

### (Effects of Collection of Non-Fire Learning Information predetermined time before Fire Alarm)

Furthermore, in the case when after a fire transfer informing signal based upon fire alarm by the fire receiver has been inputted, a recovery transfer informing signal based upon a recovery operation is inputted, the learning control part reads out input information from a predetermined time before to the input time of the fire transfer informing signal from the image recording part as non-fire learning information, and uploads the non-fire learning information to the server so as to subject the multi-layer-type neural network to learning; therefore, for example, in the case when images from 5 minutes before fire alarm are read out from the recording device and uploads the images to the server so as to be learned as non-fire learning images, supposing that the recorded images are recorded at 30 frames/second, images of 9000 sheets are obtained from the recorded images of 5 minutes so that a large number of non-fire learning images can be collected so as to be learned; thus, by downloading the multi-layer-type neural network that has subjected to the learning to the determination device on the fire alarm facility side, a non-fire state can be estimated with high accuracy from the monitoring images image-captured by the monitoring camera so as to positively prevent erroneous warning.

These effects can be obtained in the same manner as in the physical amounts such as temperature, smoke concentration or the like detected by the sensor, and by estimating a non-fire state with high accuracy from the detection signal of the sensor, erroneous warning can be positively prevented.

### (Effects of Collectionof Non-Fire Learning at the time of Recovery by Monitoring Image from Exceeding Fire Sign Level)

The fire sensor detects a temperature or a smoke concentration, and sends the detected analog value to the receiver so as to determine a fire, and in the case when after a fire transfer informing signal based upon fire warning of the fire sensor by the fire receiver has been inputted, a recovery transfer informing signal based upon a recovery fixed operation is inputted, the learning control part reads out input information from the time when the detected analog value has exceeded a predetermined fire sign level that is lower than a fire determination level to the inputted time of the fire transfer informing signal from the storage part as non-fire learning information, and uploads the non-fire learning information to the server so as to subject the multi-layer-type neural network to learning; therefore, the fire sensor detects a temperature or a smoke concentration and sends the detected analog value to the receiver so as to determine a fire, and in the case when after the fire transfer informing signal has been inputted based upon fire alarm of the fire sensor by the receiver, a recovery transfer informing signal based upon a recovery fixed operation is inputted, the learning control part reads out input information in the monitor region from the time when the detected analog value has exceeded a predetermined fire sign level that is lower than a fire determination level to the inputted time of the fire transfer informing signal from the storage part, and uploads the non-fire learning information to the server so as to subject the multi-layer-type neural network to learning; therefore, since the non-fire learning information from the time at which the temperature and smoke concentration in the monitoring region detected by the analog type fire sensor have reached a predetermined fire sign level that gives a sign of a fire that is lower than the fire decision level is read from the storage part as non-fire learning information and uploads the information to the server so as to be learned; thus, a large number of pieces of non-fire learning information from the initial stage of a fire to the decision of a non-fire state can be collected and learned, and by downloading the multi-layer-type neural network that has been subj ected to the learning to the determination device on the fire alarm facility side, a non-fire state can be estimated with high accuracy from the sensor data of the fire sensor or the like and the monitoring images image-captured by the monitoring camera so as to positively prevent erroneous warning.

### (Effects of Initialization Learning by Normal Monitoring Image in Monitor Region)

Moreover, the learning information collecting part reads out input information stored in the storage part in a normal monitoring state facility as non-fire learning information, and uploads the non-fire learning information to the server so as to subject the multi-layer-type neural network to learning; thus, estimation accuracy of non-fire state relative to the input information in the monitor region in a normal monitoring state is improved, and thereafter, learning is carried out by the input information of a fire or the input information of a non-fire state in cooperation with the fire monitoring of the receiver so that estimation accuracy relative to a fire and a non-fire state in the multi-layer-type neural network can be further improved.

### (Effects of Another Mode of Fire Monitoring System in cooperation with Server)

A fire monitoring system of another mode which is not a part of the present invention is provided with a plurality of fire detectors each of which is constituted by a multi-layer-type neural network, and detects a fire in a monitor region based upon input information, and a learning control part that is formed in the server, and downloads learning information uploaded from the learning information collecting part of one fire detector among the plural fire detectors to another fire detector so as to subject the multi-layer-type neural network of another fire detector to learning; therefore, a physical amount detected by the sensor or an image captured by an image-capturing part is uploaded on the server side as learning information so that a large number of pieces of learning information are automatically collected, and the large number of pieces of learning information thus collected are used for learning in the respective abnormality detectors so that by inputting a physical amount detected by the sensor or an image captured by a camera, it becomes possible to determine a predetermined abnormality with high accuracy.

Moreover, in the case when learning of an abnormality detector is carried out for each of similar environments to be described later, although in an attempt to carry out learning on the server side, the amount of calculations become enormous when the kinds of environments are increased, it becomes possible to prevent the load increase on the server side by carrying out the learning individually.

### (Effects of Functional Configuration of Multi-Layer-Type Neural Network)

Moreover, the multi-layer-type neural network is constituted by a characteristic extraction part and a recognition part, and the characteristic extraction part is prepared as a convolutional neural network provided with a plurality of convolutional layers to which input information in the monitor region is inputted and by which characteristic information having extracted characteristics of the input information is generated, and the recognition part is prepared as a neural network having a plurality of total-bond layers to which characteristic information outputted from the convolutional neural network is inputted and from which a fire characteristic value is outputted; therefore, since the characteristic is automatically extracted by the convolutional neural network, without the necessity of such a pretreatment as to extract a characteristic of a fire input image from input information in the monitor region, such as, for example, extraction of a contour or the like from the image, the characteristic of the input information can be extracted, and by using the succeeding recognition part, a fire can be estimated with high accuracy.

### (Effects of Learning by Back Propagation)

The learning control part tries to subject the multi-layer-type neural network to learning by using back propagation (error back propagation) that is calculated based upon an error between a value that is outputted when fire input information or non-fire input information is inputted to the multi-layer-type neural network of a fire detector and an expected value, that is, a predetermined value; therefore, a large number of pieces of input information read out from the storage part corresponding to fire warning are inputted as fire input information, and by giving an estimated value of a fire is given as an output expected value, weighting and bias in the multi-layer-type neural network are learned so as to minimize an error between the output value and the expected value by the back propagation process so that a fire is estimated with higher accuracy from the input information so as to give warning.

In the same manner, a large number of pieces of input information read out from the storage part in the case of a non-fire state relative to fire warning are inputted as non-fire input information, while an estimated value of non-fire state is given as an expected value of an output, so that weighting and bias in the multi-layer-type neural network are learned so as to minimize the error between the output value and the expected value by the back propagation process; thus, by estimating a non-fire state with higher accuracy from the input information, it becomes possible to positively prevent erroneous warning.

### Brief Description of the Drawings

FIG. 1 is an explanatory view that schematically shows a fire monitoring system for monitoring a fire by using a monitor camera and a fire sensor.
FIG. 2 is an explanatory view that shows a functional configuration of a determination device that uses a multi-layer-type neural network for estimating a fire from an image captured by the monitor camera.
FIG. 3 is an explanatory view showing a functional configuration of the multi-layer-type neural network shown in FIG. 2.
FIG. 4 is a flow chart showing learning control of the multi-layer-type neural network in cooperation with fire monitoring of a fire receiver in a learning control part of FIG. 1.
FIG. 5 is an explanatory view showing changes with time in a detected analog value detected by an analog fire sensor.
FIG. 6 is an explanatory view that schematically shows the fire monitoring system for monitoring a fire by an analog fire sensor functioning as a sensor.
FIG. 7 is an explanatory view showing a functional configuration of a determination device using a multi-layer-type neural network for estimating a fire by a detection signal from the analog fire sensor.
FIG. 8 is a time chart showing changes with time of smoke concentration detected by the analog fire sensor stored in a time-series data generation part of FIG. 7.
FIG. 9 is an explanatory view that schematically shows a fire monitoring system provided with a learning image generation function for monitoring a fire by a monitor camera.
FIG. 10 is an explanatory view showing functional configurations of a learning image generation device for generating a learning image from an image captured by a monitor camera and a determination device using a multi-layer-type neural network for estimating a fire.
FIG. 11 is an explanatory view that shows one example of generation processes of a learning image by the learning image generation device of FIG. 10.
FIG. 12 is a flow chart showing learning image generation control for generating a learning image by using manual selection of a fire source object.
FIG. 13 is a flow chart showing learning image generation control for generating a learning image by automatic detection of a fire source object.
FIG. 14 is an explanatory view that schematically shows a fire monitoring system for monitoring a fire by disposing a fire detector that is subjected to learning by a server and by using a monitor camera and a fire sensor.
FIG. 15 is an explanatory view showing a functional configuration of a fire detector using a multi-layer-type neural network for recognizing a fire from an image captured by the monitor camera.
FIG. 16 is a flow chart that shows learning image collecting control for collecting a learning image in cooperation with fire monitoring of a receiver by a learning image collecting part of FIG. 14 and for uploading the image to a server.
FIG. 17 is an explanatory view that schematically shows a fire monitoring system for monitoring a fire by using an analog fire sensor that is provided with a fire detector that is subjected to learning by the server and functions as a sensor.

### Best Mode for Carrying Out the Invention

### [Outline of Fire Monitoring System]

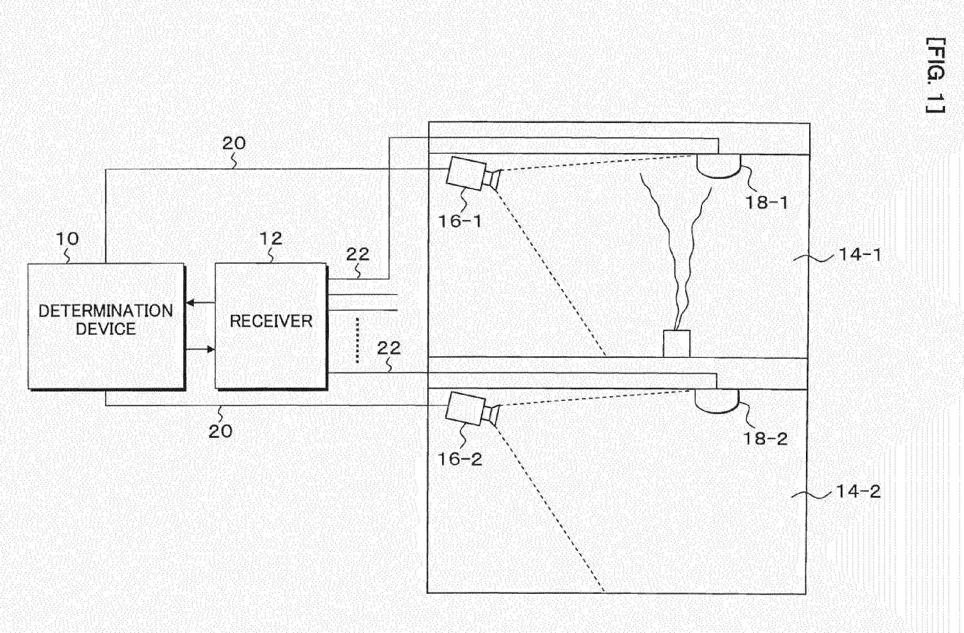

FIG. 1 is an explanatory view that schematically shows a fire monitoring system for monitoring a fire by using a monitor camera and a fire sensor.

As shown in FIG. 1, monitor regions 14-1 and 14-2 in a facility such as a building or the like are respectively provided with monitor cameras 16-1 and 16-2 functioning as imaging means, and the monitor region 14-1 is motion-image captured by the monitor camera 16-1 and the monitor region 14-2 is motion-image captured by the monitor camera 16-2.

When not specifically distinguished, the monitor regions 14-1 and 14-2 are described as monitor regions 14, and when not specifically distinguished, the monitor cameras 16-1 and 16-2 are described as monitor cameras 16.

The monitor camera 16 image-captures a color image of RGB at, for example, 30 frames/second and outputs them as motion images. Moreover, 1 frame has, for example, a pixel arrangement of 4056 × 4056 pixels in longitudinal and lateral directions.

Moreover, in the monitor regions 14-1 and 14-2, on/off type fire sensors 18-1 and 18-2 are installed and when the temperature or smoke concentration due to a fire is detected and the value exceeds a predetermined threshold level, an alarm is given, thereby outputting a fire alarm signal.

When not specifically distinguished, the fire sensors 18-1 and 18-2 are described as fire sensors 18.

With respect to the monitor regions 14, in each of a disaster prevention center, a manager's room or the like of a facility, a determination device 10 and a receiver 12 of a fire alarm facility are installed. Additionally, the determination device 10 and the receiver 12 may be prepared as integral parts. In the determination device 10, the monitor camera 16 installed in the monitor region 14 is connected with a signal cable 20-1 and a signal cable 20-2 so that motion images captured by the monitor camera 16 are inputted.

From the receiver 12, a sensor line 22 is drawn to the monitor region 14, and a fire sensor 18 is connected to each unit of the sensor line 22.

A determination device 166 is provided with a multi-layer-type neural network, and a motion image sent from the monitor camera 16 is inputted thereto on a frame-by-frame basis, and in the case when a fire image is inputted, it outputs a fire determination signal to the receiver 12 so as to output, for example, a fire sign warning or the like showing a sign of a fire. Moreover, the motion image from the monitor camera 16 is continuously recorded by a recording device installed in the determination device 10.

Upon receipt of a fire alarm signal by the alarm of fire sensor 18, the receiver 12 outputs a fire warning, and also outputs a fire transfer informing signal also including a signal for identifying which fire sensor gives warning to the determination device 10. In the case when the fire warning is outputted from the receiver 12, an administrator or a person in charge of disaster prevention goes to the installation site of the fire sensor 18 relating to the alarm to confirm the presence/absence of a fire, and in the case of confirming a fire, carries out a fire decision operation by the receiver 12. In the case when the fire decision operation is carried out in the receiver 12, a region sound warning that has been temporarily stopped is released so that a fire decision transfer informing signal is outputted to the determination device 10.

Moreover, in the case of a non-fire state in the site confirmation relative to the fire warning, after removing the reason for the non-fire state, a recovery operation is carried out in the receiver 12 so that the fire warning state is released to return to a normal monitoring state. In this manner, in the case when, after the output of a fire warning in the receiver 12, a fire recovery operation is carried out without carrying out the fire decision operation, a recovery transfer informing signal is outputted from the receiver 12 to the determination device 10.

Based upon fire monitor results by the fire transfer informing signal, the fire decision transfer informing signal and the recovery transfer informing signal outputted from the receiver 12, the determination device 10 reads out motion images of the monitor region 14 captured by the monitor camera 16 up to the output of the fire warning recorded in the recording device corresponding to the warning site of the fire sensor from the recording device, and by using these as fire image or non-fire image, controls so as to subject the multi-layer-type neural network of the determination device 10 to learning.

For example, in the case when the fire sensor 18-1 gives alarm, motion images captured by the monitor camera 16-1 are read from the recording device.

### [Determination Device]

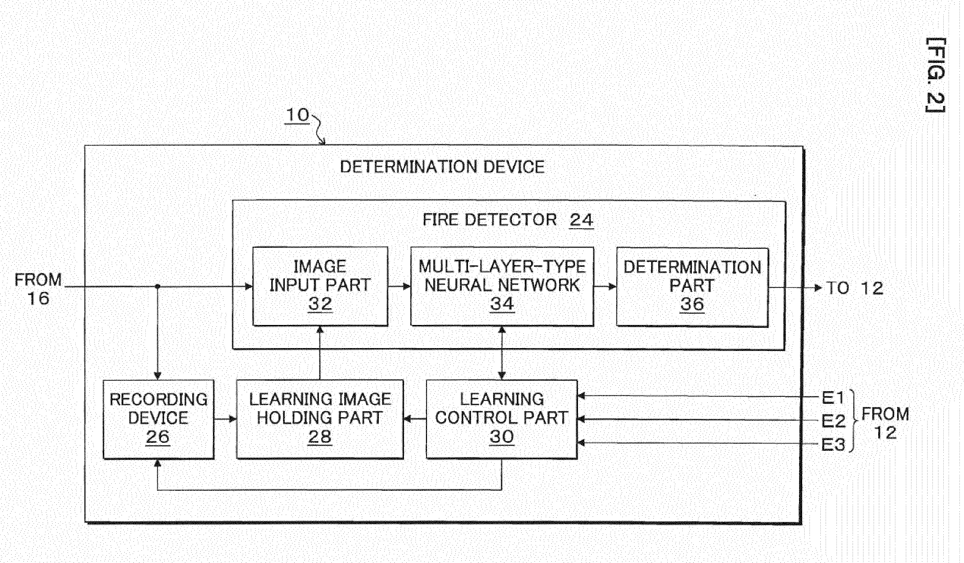

(Functional Configuration of Determination Device) FIG. 2 is an explanatory view showing a functional configuration of the determination device that uses the multi-layer-type neural network for estimating a fire from images captured by the monitor camera.

As shown in FIG. 2, the determination device 10 is provided with a fire detector 24, a recording device 26 serving as a storage part, a learning image holding part 28 and a learning control part 30, and moreover, the fire detector 24 is constituted by an image input part 32, a multi-layer-type neural network 34 and a determination part 36. In this case, the functions of the fire detector 24, the learning image holding part 28 and the learning control part 30 are realized by execution of programs by a CPU of a computer line corresponding to processes of the neural network.

The fire detector 24 inputs images in the monitor region captured by the monitor camera 16 into the multi-layer-type neural network 34 through the image input part 32, and outputs a fire determination value y1 and a non-fire determination value y2 so as to allow the determination part 36 to determine whether it is a fire or a non-fire state, and in the case of the determination of a fire, outputs a fire determination signal to the receiver 12.

The recording device 26 records motion images in the monitor region captured by the monitor camera 16, and allows the recorded motion images to be partially read out by a reproducing instruction from the outside.

In the case when the receiver 12 outputs a fire warning, based upon a fire transfer information signal E1, a fire decision transfer informing signal E2 and a recovery transfer informing signal E3 from the receiver 12, the learning control part 30 reads out motion images corresponding to required portions from the recording device 26, and allows the learning image holding part 28 to temporarily store and hold the motion images, and successively reads out the images on a frame-by-frame basis from the motion images held in the learning image holding part 28, and inputs the images to the multi-layer-type neural network 34 as supervised images through the image input part 32 so that, for example, by using a learning method such as back propagation method (error back propagation method) or the like, the multi-layer-type neural network 34 is subjected to learning of weighting and bias.

When an image in the monitor region captured by the monitor camera 16 is inputted to the multi-layer-type neural network 34 that has been subjected to learning by using the supervised image, estimated values y1 and y2 indicating classes (types) of fire and non-fire are outputted.

In this case, the fire estimated value y1 and the non-fire estimated value y2 are optimally indicated as follows:
In the case of the fire image, (y1, y2) = (1,0).
In the case of the non-fire image, (y1,y2) = (0,1).

In the case when an actual image is inputted to the multi-layer-type neural network 34, the sum total of the estimated values y1 and y2 is 1, and respectively have values in a range from 0 to 1; therefore, the estimated values y1 and y2 are inputted to the determination part 36, and compared with a predetermined threshold value, for example, 0.5, and when the estimated value y1 of a fire image, which is the threshold value or more, is obtained, a fire determination signal is outputted to the receiver 12, and from the receiver 12, for example, a fire sign warning is outputted.

Additionally, a monitor device is installed in the determination device 10, and in the case when a fire is determined, an image, which is in the monitor region in which the fire is determined, and is captured by the monitor camera 16, is screen-displayed, and a chief administrator or a person in charge of disaster prevention who has noticed the fire sign warning from the receiver 12 may confirm the fire. In this case, a fire decision switch is installed in the operation part of the determination device 10, and when upon confirmation of a fire from the monitor image, the fire decision switch is operated, a fire informing signal is outputted, in the same manner as in the case of the operation of a transmitter in the receiver 12, so that the receiver 16 may output a fire warning.

Moreover, the determination device 10 uses the recorded information corresponding to an alarm informing site of the fire sensor as the input information; however, the fire detector 24 is also desirably installed independently for each sensor. That is, although the same learning method is used for any of the fire detectors 24, the respective fire detectors 24 have different input information given thereto, and the determinations are carried out by respectively different determination methods; thus, learning that is specialized for the installation environment can be carried out.

### [Multi-Layer-Type Neural Network]

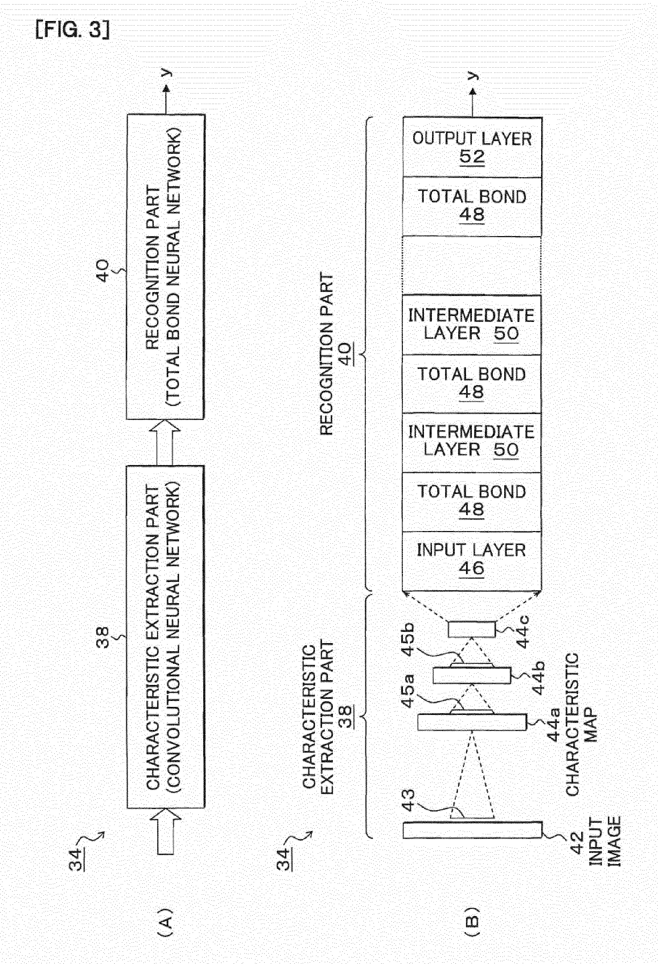

FIG. 3 is an explanatory view showing a functional configuration of the multi-layer-type neural network shown in FIG. 2; FIG. 3 (A) shows the outline thereof, and FIG. 3(B) schematically shows a detailed configuration.

As shown in FIG. 3(A), a multi-layer-type neural network 34 in the present embodiment is constituted by a characteristic extraction part 38 and a recognition part 40. The characteristic extraction part 38 is constituted by a convolutional neural network, and the recognition part 40 is constituted by a total-bond neural network.

The multi-layer-type neural network 34 corresponds to a neural network that carries out a deep learning process (Deep Learning) and corresponds to a neural network having a deep hierarchy in which a plurality of intermediate layers are bonded to one another so that an expression learning corresponding to characteristic extraction is carried out.

The normal neural network requires manual work based upon artificial tries and errors as characteristic extraction for estimating a fire from images; however, the multi-layer-type neural network 34 uses a convolutional neural network as the characteristic extraction part 38 so that an optimal characteristic is extracted by learning, with pixel values of images being used as inputs, and by inputting this to the total bond neural network of the recognition part 40, recognition as to a fire or a non-fire state is carried out.

As schematically shown in FIG. 3(B), the total bond neural network of the recognition part 40 is constituted by repeating structures of an input layer 46, a bond layer 48, an intermediate layer 50 and the bond layer 48, as well as an output layer 52.

Since the total bond neural network of the recognition part 60 carries out multiple classifying processes for classifying input images into two classes of fire and non-fire; therefore, on the last output layer 72, two units that are the same units as those of two target classes are disposed, and inputs into these units are set to outputs y1 and y2 by using a softmax function, with the sum total being 1, so that the outputs y1 and y2 of the respective units indicate probabilities for belonging to the corresponding class.

### (Convolutional Neural Network)

FIG. 3(B) schematically shows a configuration of the convolutional neural network constituting the characteristic extraction part 38.

The convolutional neural network, which has a slightly different characteristic from the normal neural network, takes a biological structure from a visual cortex. The visual cortex includes a receive cortex forming an aggregation of small cells that are sensitive to small sections of a viewing field, and behaviors of the receive cortex can be simulated by learning weighting in the form of a matrix. This matrix is referred to as weighting filter (kernel), and in the same function as the receive cortex exerts in the biological term, this is made sensitive on small sections that are similar to certain images.

The convolutional neural network can represent similarity between the weighting filter and the small section by convolutional operations, and by these operations, appropriate characteristics of the images can be extracted.

As shown in FIG. 3(B), the convolutional neural network first carries out convolutional processes on an input image 42 by using a weighting filter 43. For example, the weighting filter 43 is a matrix filter subjected to a predetermined weighting process of 3 × 3 in longitudinal and lateral directions, and by carrying out the convolutional operations, while positioning the filter center onto each pixel of the input image 42 so that 9 pixels of the input image 42 is convoluted into one pixel of a characteristic map 44a forming a small section so that a plurality of characteristic maps 44a are generated.

Successively, a pooling operation is carried out on the characteristic maps 44a obtained from the convolutional operations. The pooling operation is a process for removing characteristic amounts unnecessary for recognition, and for extracting characteristic amounts that are necessary for recognition.

Successively, by repeating the convolutional operations using the weighting filters 45a and 45b and the pooling operations in multiple stages, characteristic maps 44b and 44c are obtained, and the characteristic map 44c on the last layer is inputted to a recognition part 40 so that a fire or a non-fire state is estimated by the recognition part 40 using the normal total bond neural network.

Additionally, with respect to the pooling operation in the convolutional neural network, it fails to clearly indicate characteristic amounts that are unnecessary for recognizing a fire or a non-fire state, and necessary characteristic amounts might be omitted; therefore, it is possible not to carry out the pooling operation.

### [Learning of Multi-Layer-Type Neural Network]

### (Back Propagation)

The neural network constituted by an input layer and a plurality of intermediate layers and an output layer is designed so that by installing a plurality of units on each layer so as to be bonded to a plurality of units on another layer, with each unit being provided with weighting and a bias value, and a vector product is found between a plurality of input values and the weighting, and by adding the bias value thereto, the sum total is found, and by allowing this to be subjected to a predetermined activating function, the resulting value is outputted to the unit of the next layer such that a forward propagation in which values up to arriving at the final layer are propagated is carried out.

In an attempt to alter the weight and bias of this neural network, a learning algorithm known as back propagation is used. In the back propagation, there are supervised learning in the case when a data value set of an input value x and an expected output value (expected value) y is given to a network, and learning not supervised in which only the input value x is given to the network, and in the present embodiment, supervised learning is carried out.

In the case when the back propagation is carried out by the supervised learning, as an error caused upon comparing an estimated value y* as the result of forward propagation through the network with an expected value y, for example, a function of the mean square error is used.

In the back propagation, by using the size of an error between the estimated value y* and the expected value y, the value is propagated while correcting weighting and bias from the rear toward the front side of the network. The corrected amount on each weighting and each bias is dealt as a contribution to the error, and calculated by the most urgent lowering method, and by altering the values of weighting and bias, the value of the error function is minimized.

The sequence of processes of learning of the back propagation relative to the neural network is explained as follows.
(1) By inputting an input value x to the neural network, forward propagation is carried out to find out an estimated value y*.
(2) An error is calculated by an error function based upon the estimated value y* and the expected value y.
(3) While updating the weighting and bias, back propagation is carried out by the network.

This sequence of processes are repeatedly carried out by using the combination of the different input value x and expected value y until the error between the weight and bias of the neural network is minimized as small as possible so that the value of the error function is minimized.

In the supervised learning control of the multi-layer-type neural network 34 shown in FIG. 3(B), the above-mentioned back propagation is carried out by using the following equations: Expected values of a fire image (y1, y2) = (1, 0). Expected values of a non-fire image (y1, y2) = (0,1).

Additionally, in the case when back propagation is carried out by using non-supervised learning, by using the size of an error between the estimated value y* and the inputted value x, the value is propagated while correcting weighting and bias from the rear toward the front side of the network. In this case also, the corrected amount on each weighting and each bias is dealt as a contribution to the error, and calculated by the most urgent lowering method, and by altering the values of weighting and bias, the value of the error function is minimized.

### [Learning Control in cooperation with Fire Monitoring of Receiver]

### (Learning by Fire Image)

In the case when a fire transfer informing signal E1 is inputted based upon fire alarm of the fire sensor 18 by the receiver 12 and a fire warning is outputted and a fire is confirmed by a site confirmation by an administrator or the like, and based upon this, a fire decision transfer informing signal E2 is inputted by a fire decision operation in the receiver 12, the learning control part 30 in the determination device 10 shown in FIG. 2 reads out images in the monitor region from, for example, before predetermined time, such as 5 minutes before, to the time at which the fire transfer informing signal E1 is inputted from the recording device 26, and by inputting the images to the multi-layer-type neural network 34 of the fire detector 24 through the image input part 32 as fire images, the estimated value y* is found, and by repeatedly carrying out back propagation processes so as to minimize the value of an error function relative to the fire expected value y = 1, while changing supervised images, so that the error function is minimized, thereby carrying out learning so as to alter the weighting and bias.

In this case, supposing that the record images are recorded in the recording device 26 as motion images of 30 frames/second, 9000 sheets of fire images are obtained from recorded images of 5 minutes; therefore, since learning by the use of a large number of fire images, such as 9000 sheets, is easily realized, a fire can be estimated with higher accuracy from the monitoring images captured by a camera, thereby making it possible to give warning.

Additionally, in the case when fire images are generated from the motion images of 5 minutes, since a change between the frame images corresponds to a cycle of 1/30 second is very small, for example, the frame images thinned, for example, by a 1 second cycle may be used as supervised images. In this case, fire images of 300 sheets can be obtained from motion images of 5 minutes so that sufficient number of images for the learning of the multi-layer-type neural network 34 by back propagation can be obtained.

### (Learning by Non-Fire Image)

In the case when after a fire transfer informing signal E1 has been inputted based upon fire alarm of the fire sensor 18 by the receiver 12, a non-fire state is confirmed by the site confirmation by an administrator or the like, a recovery operation is carried out by the receiver 12 and a recovery transfer informing signal E3 is inputted based upon the recovery operation; therefore, in this case, the learning control part 30 reads out images in the monitor region from, for example, before predetermined time, such as 5 minutes before, to the time at which the fire transfer informing signal E1 is inputted from the recording device 26, and by inputting the images to the neural network 34 of the fire detector 24 through the image input part 32 as non-fire images, the estimated value y* is found, and by repeatedly carrying out back propagation processes so as to minimize the value of an error function relative to the non-fire expected value y = 0, while changing supervised images, thereby carrying out learning so as to alter the weighting and bias.

In this case, supposing that the record images are recorded in the recording device 26 as motion images of 30 frames/second, 9000 sheets of fire images are obtained from recorded images of 5 minutes; therefore, since learning by the use of a large number of non-fire images, such as 9000 sheets, is easily realized, a non-fire state can be estimated with higher accuracy from the monitoring images captured by a camera, thereby making it possible to prevent erroneous warning.

Moreover, in the case when non-fire images are generated from motion images of 5 minutes, since a change between the respective frame images corresponding to a cycle of 1/30 second is very small, for example, the frame images thinned, for example, by a 1 second cycle may be used as non-fire images.

### (Initializing Learning of Determination Device)

The multi-layer-type neural network 34 of the determination device 10 shown in FIG. 2, has its weighting and bias randomly initialized in a manufacturing state in a factory or the like, and the initialization is carried out by learning by back propagation using preliminarily prepared standard fire image and non-fire image, and the device in this state is installed in a facility that forms a monitoring object as shown in FIG. 1.

In this case, since the image in the monitor region 14 captured by the monitor camera 16 varies depending on the monitor region 14, and is different from the standard supervised image used in the initializing learning; therefore, motion images in a normal monitoring state that is captured by the monitor camera 16 at the time of starting up after the installation in a facility, and recorded in the recording device 26, that is, motion images in a non-fire state are recorded in the recording device 26, and among the images, recorded images in a predetermined time, for example, 5 minutes, are read out by a reproducing operation, and held in the learning image holding part 28 as non-fire images, and by inputting these non-fire images are inputted to the multi-layer-type neural network 34, the estimated value y* is found, and in order to minimize the error between this value and the expected value y = 0 of the non-fire state, by repeatedly carrying out back propagation processes so as to minimize an error function, while changing supervised images, learning is desirably carried out so as to alter the weighting and bias.

As supervised images to be used in this learning, among motion images of one day in the monitor region, motion images that are different depending on time zones, such as morning, day time and night, are read out from the recording device 26, and desirably learned as non-fire images.

As the timing of the initialization learning, the timing may be further set at the time of starting up the device. Thus, first, the non-fire state in the installation environment can be learned.

Moreover, as the timing of the initialization learning, the timing may be set at the time when a predetermined operation is carried out. Thus, the non-fire state can be learned at desired timing, and for example, when interior design is changed, or the like, the non-fire state can be learned at once.

Furthermore, as the timing of the initialization learning, the timing may be set at the time when none of sensor output and captured image by the camera exist or substantially exist. Thus, the non-fire state can be automatically learned in a positively stable state of the monitor region.

Moreover, the timing of the initialization learning may be shifted for every predetermined time. For example, at the first time, the initialization learning is carried out at each of 6 am, 12 am, 18 pm and 24 pm, and at the second time, the initialization learning is carried out at each of 7 am, 13 pm, 19 pm and 1 am. Thus, learning data in non-fire state can be obtained at dispersed timings, and non-fire states including special states, such as cooking time, morning glow and sunset glow, can be learned.

By the learning process, with monitoring images in the monitor region 14 being used as non-fire images, estimation accuracy of non-fire relative to images in the monitor region in the normal monitoring state can be improved. Thereafter, learning by the use of fire images or non-fire images in cooperation with fire monitoring by the aforementioned receiver 12 is carried out so that estimation accuracy relative to fire and non-fire states of the multi-layer-type neural network 34 can be further improved.

### (Control Operation by Learning Control Part)

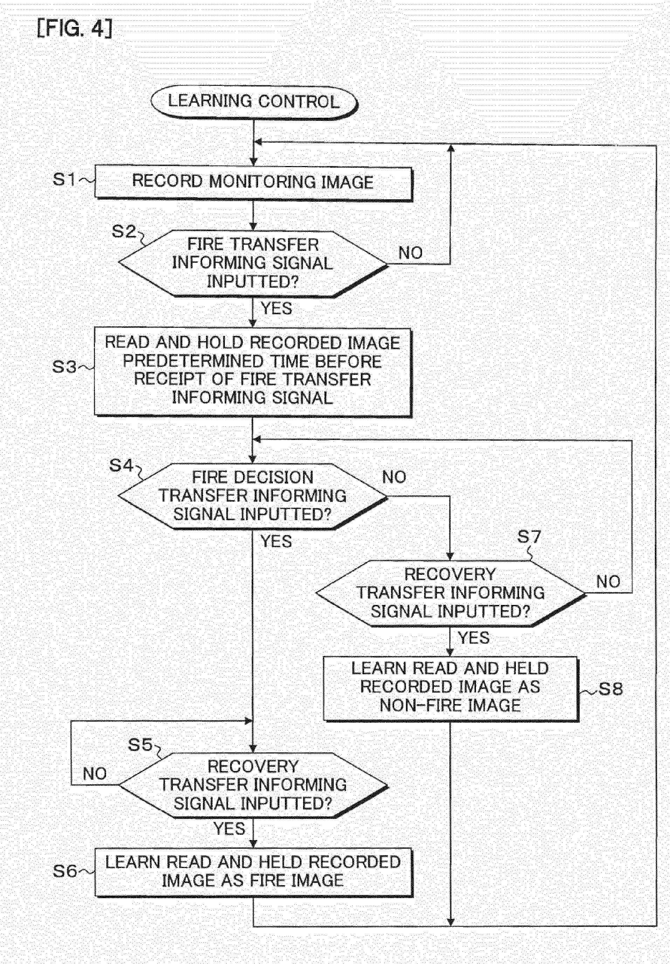

FIG. 4 is a flow chart showing learning control of a multi-layer-type neural network in cooperation with the fire monitoring of the fire receiver by the learning control part of FIG. 1.

As shown in FIG. 4, the learning control part 30 allows the recording device 26 to record motion images from the monitor camera 16 installed in the monitor region in step S1, and upon determination of an input of a fire transfer informing signal from the receiver 12 in step S2, the sequence proceeds to step S3, and recorded images from predetermined time before are read out from the recording device 26, and held in the learning image holding part 28.

Next, the sequence proceeds to step S4, and when the learning control part 30 has determined an input of a fire decision transfer informing signal from the receiver 12, the sequence proceeds to step S5, and thereafter, upon determination of an input of a recovery transfer informing signal from the receiver 12, the sequence proceeds to step S6, and recorded images corresponding to predetermined time held by the learning image holding part 28 are read out, and the images are inputted to the multi-layer-type neural network 34 as fire images so that learning is carried out so as to alter the weighting and bias by using back propagation.

On the other hand, in the learning control part 30, without determination of an input of a fire decision transfer informing signal at step S4, while determining the presence/absence of an input of a recovery transfer informing signal in step S7, when an input of a recovery transfer informing signal is determined in step S7 without determining the input of the fire decision transfer informing signal, the sequence proceeds to step S8, and the recorded images corresponding to predetermined time held by the learning image holding part 28 are read out, and the images are inputted to the multi-layer-type neural network 34 as non-fire images so that learning is carried out so as to alter the weighting and bias by using back propagation.

### [Fire Learning by Monitor Image from Exceeding Fire Sign Level]

### (Learning by Fire Image)

As another embodiment of learning control by the learning control part 30 of the determination device shown in FIG. 2, in the case when an analog fire sensor is installed in a warning section and by detecting a temperature or a smoke concentration by the analog fire sensor and by sending the detected analog value to the receiver 13 so as to determine a fire, images from the time when a fire sign is determined to the time when a fire is determined are read out from the recording device 26 so that learning of the multi-layer-type neural network 34 is carried out by back propagation.

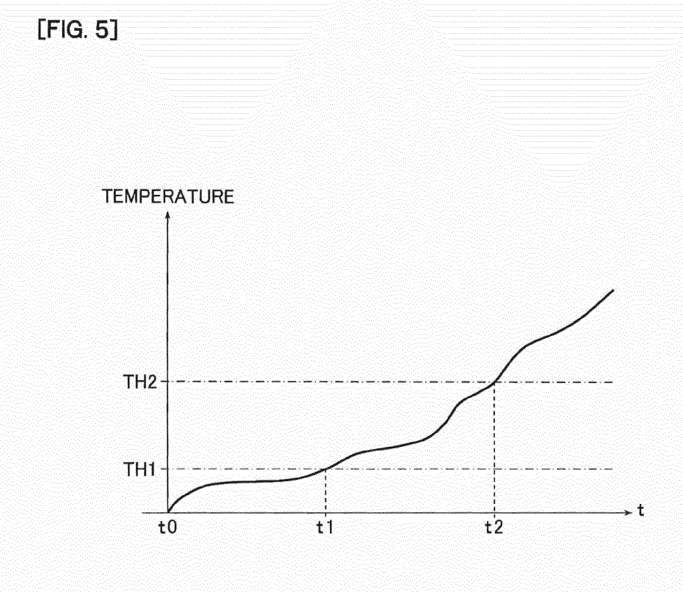

With respect to the fire sign level, as shown in FIG. 5, in the case when the temperature that is being detected by the fire sensor rises as time elapses due to a fire that occurred at time t0, images recorded during time T from time t1 at which the temperature has reached a fire sign level TH1 that is lower than a fire determination level TH2 to time t2 at which it has reached the fire determination level TH2 are used as fire images so that the back propagation is carried out.

All the images recorded during time T are images related to the fire and no non-fire images are not included; therefore, by inputting these to the multi-layer-type neural network 34 as fire images, learning is carried out by back propagation so as to alter weighting and bias so that accuracy for recognizing a fire from input images can be positively improved.

More specifically, in the learning control part 30 of the determination device 10 shown in FIG. 2, when the detected analog value of the temperature or smoke concentration from analog fire sensor from the receiver 12 has reached the predetermined fire sign level TH1, a sign warning is outputted, and successively, when the detected analog value has reached the fire level TH2, a fire transfer informing signal based upon a fire alarm is inputted thereto so that a fire warning is outputted and a fire is confirmed by a site confirmation by an administrator or the like, and when based upon this, a fire decision transfer informing signal E2 based upon a fire decision operation of the receiver 12 is inputted thereto, images in the monitor region from the time at which a fire sign is detected to the time at which the fire transfer informing signal is inputted, are read out from the recording region 26, and by inputting these to the neural network 34 of the fire detector 24 through the image input part 32 as fire images, learning is carried out by back propagation so as to alter weighting and bias.

### (Learning by Non-fire images)

Moreover, in the learning control part 30, when the detected analog value of the temperature or smoke concentration from analog fire sensor from the receiver 12 has reached the predetermined fire sign level TH1, a sign warning is outputted, and successively, when the detected analog value has reached the fire level TH2, a fire transfer informing signal based upon a fire alarm is inputted thereto so that a fire warning is outputted and in the case when a non-fire state is confirmed by a site confirmation by an administrator or the like, a recovery operation is carried out in the receiver 12, and since a recovery transfer informing signal based upon the recovery operation is inputted thereto, images in the monitor region from the time at which a fire sign is detected to the time at which the fire transfer informing signal is inputted, are read out from the recording region 26, and by inputting these to the multi-layer-type neural network 34 of the fire detector 24 through the image input part 32 as non-fire images, learning is carried out by back propagation so as to alter weighting and bias.

### [Fire Monitoring System monitoring Fire by Sensor]

### (Outline of Fire Monitoring System)

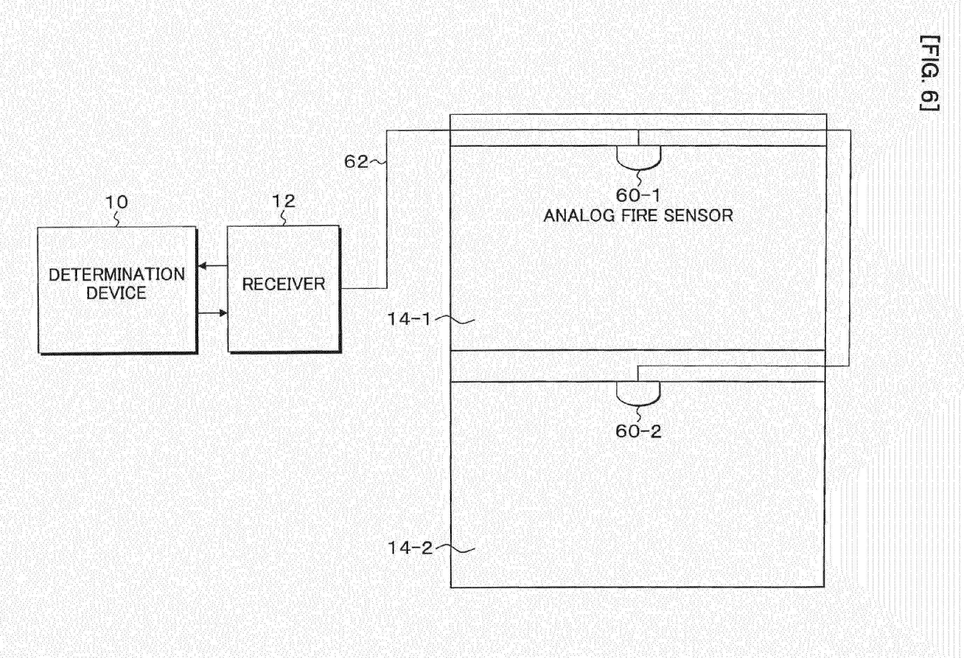

FIG. 6 is an explanatory view schematically showing a fire monitoring system for monitoring a fire by an analog fire sensor functioning as a sensor.

As shown in FIG. 6, analog fire sensors 60-1 and 60-2 serving as sensors are installed at a monitor region 14 in a facility such as a building or the like, and connected to a transmission path 62 drawn from the receiver 12 so as to allow serial data transmission. When not specifically distinguished, the analog fire sensors 60-1 and 60-2 are described as analog fire sensors 60.

The analog fire sensor 60 detects a smoke concentration by a smoke detection part and outputs a smoke concentration detection signal, and by transmission of a batch AD conversion command from the receiver 12, periodically carries out A/D conversion thereon so as to be stored in the memory as smoke concentration data, and also transmits smoke concentration data relative to polling from the receiver 12 which has specified a sensor address, and when the smoke concentration exceeds a predetermined threshold value level, makes determination as a fire, and transmits a fire interrupt signal to the receiver 12 so as to output a fire warning. Additionally, the analog fire sensor 60 may detect the temperature, CO concentration or the like in addition to the smoke concentration.

The determination device 10 is provided with the multi-layer-type neural network to which the smoke concentration data detected by the analog fire sensor 60 is inputted through the receiver 12 to be stored in the storage part as input information from the sensor.

Upon receipt of the fire interrupt signal of the analog fire sensor 60, the receiver 12 outputs a fire warning and also outputs the fire transfer informing signal to the determination device 10. When the fire warning is outputted from the receiver 12, an administrator or a person in charge of fire prevention goes out to the installation site of the fire sensor 18 that has given the warning, and confirm the presence/absence of a fire, and in the case when a fire is confirmed, the receiver 12 carries out the fire decision operation. When the fire decision operation is carried out in the receiver 12, a region sound warning that has been temporarily stopped is released so that a fire decision transfer informing signal is outputted to the determination device 10.

Moreover, in the case of a non-fire state in the site confirmation relative to the fire warning, after removing the reason for the non-fire state, a recovery operation is carried out in the receiver 12 so that the fire warning state is released to return to a normal monitoring state. In this manner, in the case when, after the output of the fire warning in the receiver 12, a fire recovery operation is carried out without carrying out the fire decision operation, a recovery transfer informing signal is outputted from the receiver 12 to the determination device 10.

Based upon fire monitor results by the fire transfer informing signal, the fire decision transfer informing signal and the recovery transfer informing signal outputted from the receiver 12, the determination device 10 generates, for example, time series data from the smoke concentration data detected by the analog fire sensor 60 of the monitor region 14 up to the output of the fire warning stored in the storage part corresponding to the site of the fire sensor that has transmitted the fire interrupt signal, and inputs this to the multi-layer-type neural network of the determination device 10 as learning information so as to carry out control for learning.

For example, in the case when the analog fire sensor 60-1 gives the fire interrupt signal, the time-series data of the analog fire sensor 60-1 is read out from the storage part. Moreover, in the case when a sensor other than the analog fire sensor is further provided, sensor data installed in the monitor region is read out from the storage part.

With respect to the input information of fire monitoring for use in monitoring a fire by the sensor, in addition to the time-series data, polynomial data derived from a plurality of sensors may be adopted, or time-series data of a plurality of sensors corresponding to the combination thereof may be adopted.

### (Determination Device)

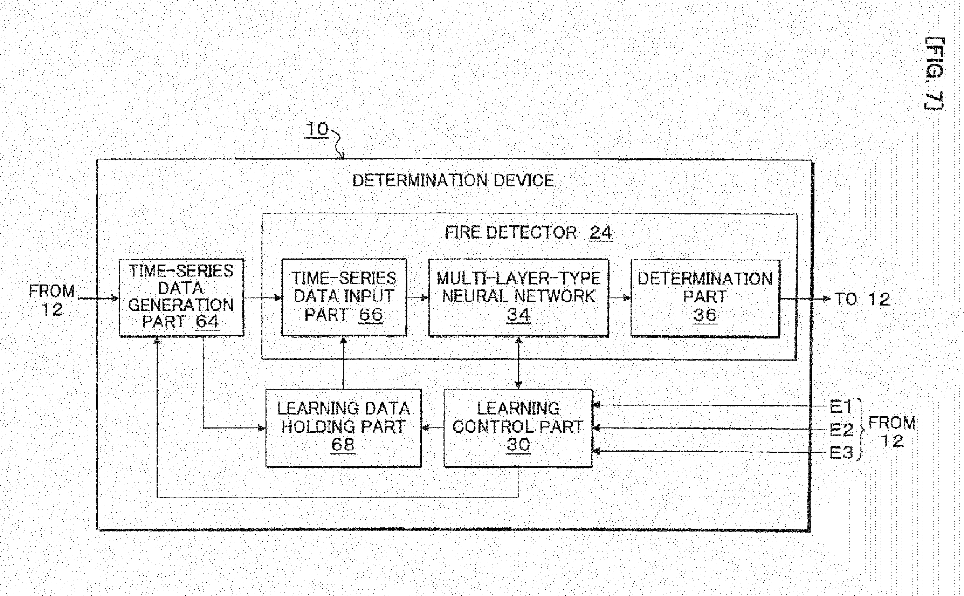

FIG. 7 is an explanatory view showing a functional configuration of a determination device using a multi-layer-type neural network for estimating a fire by a detection signal from an analog fire sensor.

As shown in FIG. 7, the determination device 10 is provided with a fire detector 24, a time-series data generation part 64 having a storage part, a learning data holding part 68 and a learning control part 30, and the fire detector 24 is also constituted by a time-series data input part 66, a multi-layer-type neural network 34 and a determination part 36.

The multi-layer-type neural network 34 of the present embodiment is only provided with a total-bond neural network forming a recognition part 40 shown in FIG. 3(A), and the convolutional neural network forming a characteristic extraction part 38 is excluded therefrom.

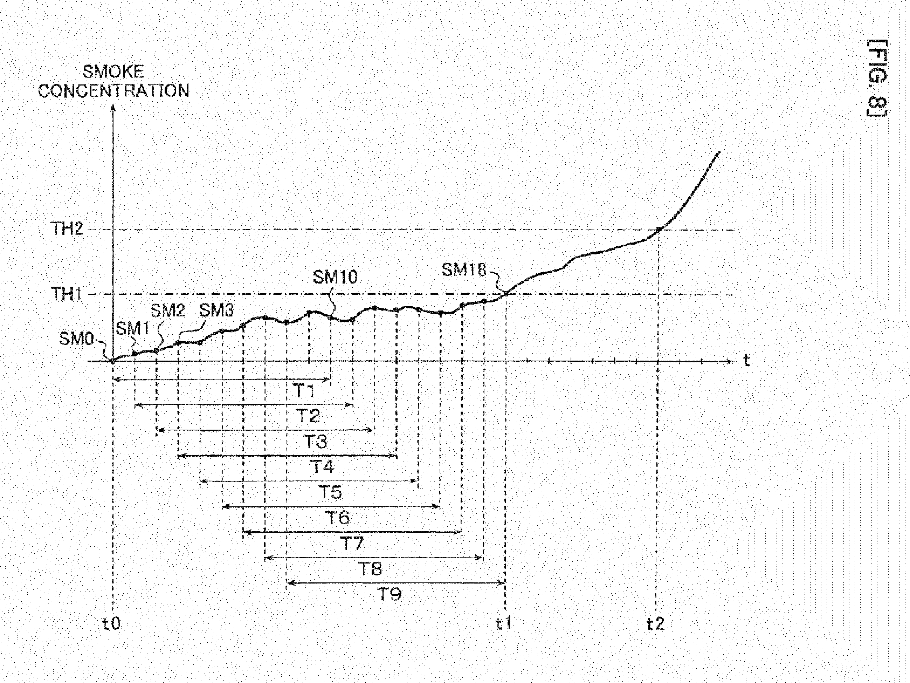

The time-series data generation part 64 stores smoke concentration data detected in the analog fire sensor 60 through the receiver 12 in the storage part. The smoke concentration data to be stored in the storage part of the time-series data generation part 64 forms, for example, data that shows changes in smoke concentration with the passage of time shown in FIG. 8.

The smoke concentration data of FIG. 8 is one example of the time-based change of smoke concentration due to a fire, and shows a case in which the smoke concentration starts rising at time t0, and has reached a predetermined pre-alarm level TH1 at time t1, and then has reached a fire level TH2 at time t2 so as to output a fire warning, thereby carrying out a fire decision operation.

In the case when based upon a fire transfer informing signal E1, a fire decision transfer informing signal E2 and a recovery transfer informing signal E3 from the receiver 12, a fire warning is outputted from the receiver 12, the learning control part 30 instructs the time-series data generation part 64 to generate time-series data based upon sensor data of smoke concentration shown in FIG. 8 stored in the storage part, and inputs the data to the multi-layer-type neural network 34 through the time-series data input part 66 as time-series data of a fire so as to subject the multi-layer-type neural network 34 to learning of weighting of the multi-layer-type neural network 34 and bias by back propagation method.

The generation of the time-series data by the time-series data generation part 64 is carried out as follows: Supposing that smoke concentration data are S1 to S18 for each predetermined unit of time Δt from time t0 to time t1 at which the pre-alarm level TH1 has been reached, for example, as shown in FIG. 8, time series data (S1 to S10), (S2 to S11), ...(S9 to S18) are generated for each cycle T1, T2, ...T9 corresponding to a predetermined time, while shifting per predetermined unit of time Δt, and the resulting data is stored in the data holding part 68.

The learning of the multi-layer-type neural network by using time-series data (S1 to S10), (S2 to S11), ...(S9 to S18) is carried out by inputting the concentration vales S1 to S8 to the input layer of the multi-layer-type neural network 34 in parallel with one another, when for example, the learning by time-series data (S1 to S10) is exemplified. Thereafter, with respect to the rest of the time-series data (S2 to S11), ...(S9 to S18), the learning is carried out in the same manner by successively inputting the data into the input layer in parallel with one another.

Moreover, in the case when after a fire transfer informing signal E1 has been inputted based upon a fire alarm of the fire sensor 18 by the receiver 12, a non-fire state is confirmed by a site confirmation by an administrator or the like, a recovery operation is carried out by the receiver 12, and based upon this, a fire recovery transfer informing signal E3 is inputted based upon the recovery operation; therefore, in the same manner as in the case of the fire time-series data shown in FIG. 8, non-fire time-series data is generated, and the data is inputted to the multi-layer-type neural network 34 of the fire detector 24 through the time-series data input part 66 so that the multi-layer-type neural network 34 is subjected to learning of weighting and bias by back propagation method.

After the learning of the neural network 34 of the fire detector 24 has been finished, time-series data corresponding to predetermined time is generated for each predetermined unit of time Δt by the time-series data generation part 64, and inputted to the multi-layer-type neural network 34 through the time-series data input part 66 so as to monitor a fire.

The determination device 10 uses time-series data corresponding to the analog fire sensor that has transmitted the fire interrupt signal as the input information, and the fire detector 24 is desirably prepared as an independent device for each of the sensors. That is, although the learning method is the same as in any of the fire detectors 24, different pieces of input information are given to the respective fire detectors 24 and the determination of a fire is also carried out by using different determination methods. Thus, learning that is specialized for the installation environment can be carried out.

### [Outline of Fire Monitoring System provided with Generation Function of Learning Image]

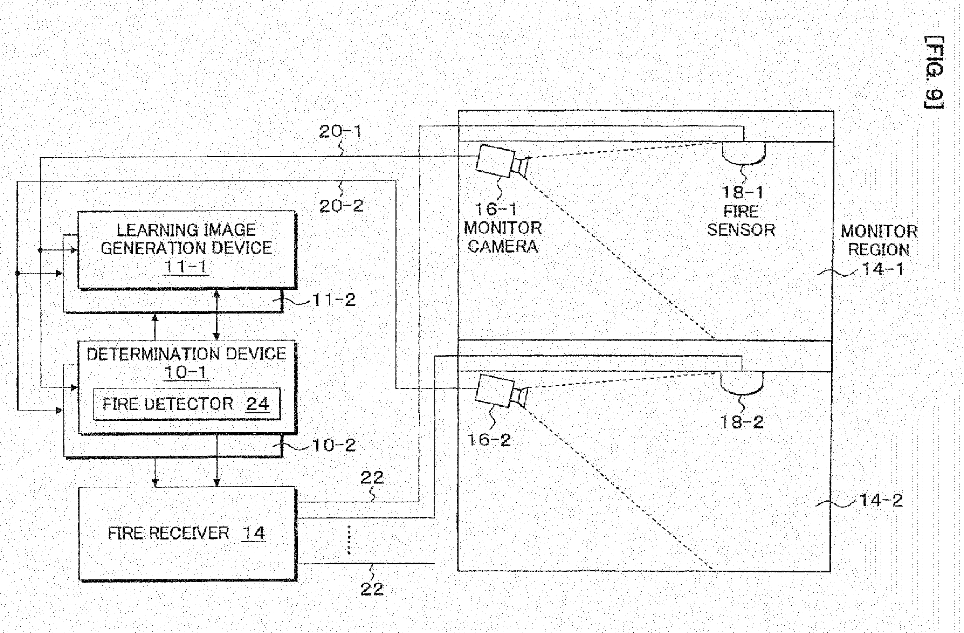

FIG. 9 is an explanatory view that schematically shows a fire monitoring system provided with a generation function of learning image for monitoring a fire by using a monitor camera and a fire sensor.

As shown in FIG. 9, the fire monitoring system of the present embodiment has basically the same configuration as that shown in the embodiment of FIG. 1; however, it is different therefrom in that in the determination devices 10-1 and 10-2 installed so as to correspond to the monitor regions 14-1 and 14-2, learning image generation devices 11-1 and 11-2 are installed. Additionally, when not specifically distinguished, the determination devices 10-1 and 10-2 are described as determination devices 10, and when not specifically distinguished, the learning image generation devices 11-1 and 11-2 are described as learning image generation devices 11.

The determination device 10 is provided with a fire detector 24 constituted by a multi-layer-type neural network, and a motion image sent from the monitor camera 16 is inputted thereto on a frame-by-frame basis, and in the case when a fire is detected from the motion image, a fire determination signal is outputted to the fire receiver 12 so that, for example, a fire sign warning or the like showing a sign of a fire is outputted.

The learning image generation device 11 stores fire smoke images and non-fire smoke images preliminarily generated, and composes a fire smoke image in a normal monitoring image in the warning region 14 captured by the monitor camera 16 in a normal monitoring state to generate a fire learning image to be stored, and also composes a non-fire smoke image in a normal monitoring image to generate a non-fire learning image to be stored, and by inputting the fire learning image and the non-fire learning image to the multi-layer-type neural network installed in the fire detector 24 of the determination device 10 so as to be learned by deep learning.

### [Determination Device and Learning Image Generation Device]

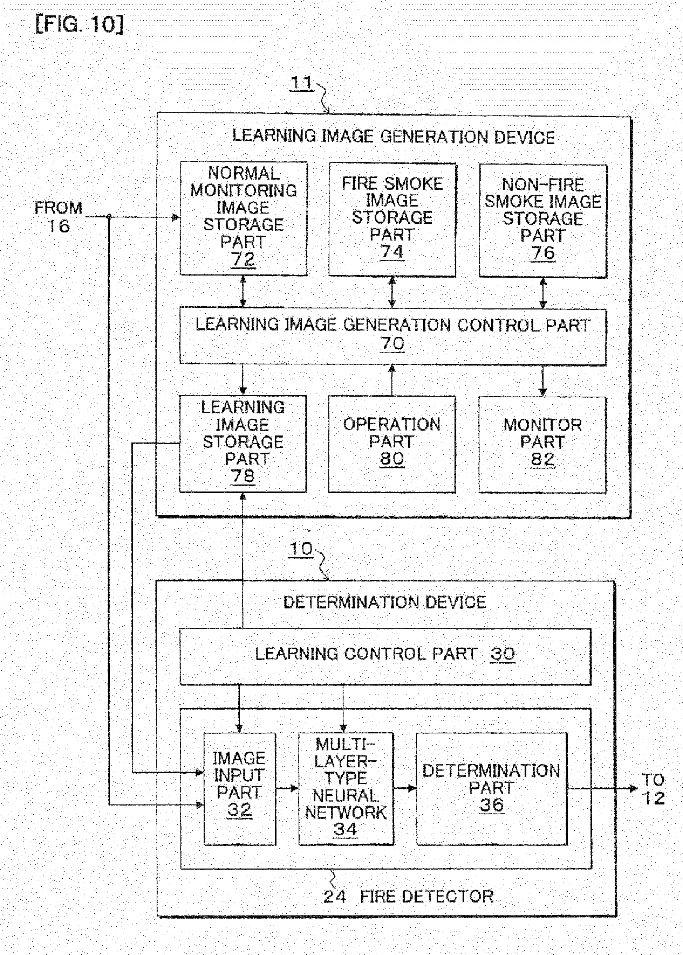

FIG. 10 is an explanatory view that shows a functional configuration of a determination device that uses a learning image generation device for generating a learning image from images captured by a monitor camera and a multi-layer-type neural network for estimating a fire.

### (Functional Configuration of Determination Device)

As shown in FIG. 10, the determination device 10 is provided with a fire detector 24 and a learning control part 30, and the fire detector 24 is constituted by an image input part 32, a multi-layer-type neural network 34 and a determination part 36, which is basically the same as the determination device 10 of FIG. 2.

### (Functional Configuration of Learning Image Generation Device)

As shown in FIG. 10, the learning image generation device 11 is constituted by a learning image generation control part 70, a normal monitoring image storage part 72, a fire smoke image storage part 74, a non-fire smoke image storage part 76, a learning image storage part 78, an operation part 80 andamonitorpart 82, and functions of the learning image generation part 70 are realized by execution of a program by a CPU in a computer line. Moreover, the normal monitoring image storage part 72, the fire smoke image storage part 74, the non-fire smoke image storage part 76 and the learning image storage part 78 are divided for respective functions; however, as hardware, the single storage part is used.

In the normal monitoring image storage part 72, frame images captured by the monitor camera 16 in a normal monitoring state, that is, in a state without a fire or a non-fire causing state, are stored as normal monitoring images.

In the fire smoke image storage part 74, as fire smoke image preliminarily generated, for example, a plurality of fire smoke images that vary in time series are stored. The fire smoke images that vary in time series can be generated from motion images that are formed by capturing smoke caused by a fire experiment or the like and recorded in the recording device.

For example, supposing that smoke caused by a fire experiment is captured by a monitor camera and recorded in the recording device as motion images at 30 frames/second, fire smoke images of 9000 sheets, which are sufficient number of fire smoke images for the learning of the multi-layer-type neural network 34, are obtained from the recorded images of 5 minutes from the occurrence of a fire (start of experiment). In this case, by removing the background from the fire smoke image, or by unifying the background color to blue, images in which only the smoke exists can be formed.

Moreover, smoke caused by a fire is different depending on materials of a fire source object to be burned, a burning experiment is carried out for each of materials for a fire source object, and fire smoke images for predetermined period of time that vary in time series are stored. For example, when the material of a fire source object is timber, cloth, paper or the like, fire smoke images with white smoke are stored, or when the material of a fire source object is synthesized resin, fire smoke images of black smoke are stored.

In the non-fire smoke image storage part 76, non-fire smoke images preliminarily generated are stored. The fire smoke images to be stored in the non-fire smoke image storage part 76 are, for example, a cooking steam image generated by image-capturing steam caused by cooking, a cooking smoke image generated by image-capturing smoke caused by cooking, a smoking image generated by image-capturing smoke caused by smoking and an illumination lighting image generated by capturing an illumination equipment in a lighting state, which are stored in association with types of non-fire smoke generation sources. Moreover, the cooking steam image, the cooking smoke image and the smoking image are stored in the non-fire smoke image storage part 76 as non-fire smoke images that vary in time series.

The learning image generation control part 70 carries out controlling processes in which a fire smoke image stored in the fire smoke storage part 74 is composed with a normal monitoring image stored in the normal monitoring image storage part 72 to generate a fire learning image to be stored in the learning image storage part 78, and a non-fire smoke image stored in the non-fire smoke storage part 76 is composed with a normal monitoring image stored in the normal monitoring image storage part 72 to generate a non-fire learning image to be stored in the learning image storage part 78.

The generation control of a learning image by the learning image generation control part 70 includes two processes, that is, a manual selection control process in which a fire source object and its material are selected from a normal monitoring image by manual operations using an operation part 80 and a monitor part 82, and an automatic detection control process in which a fire source object and its material are automatically selected from a normal monitoring image.

### (Learning Image Generation Control by manually collecting Fire Source Object and Material)

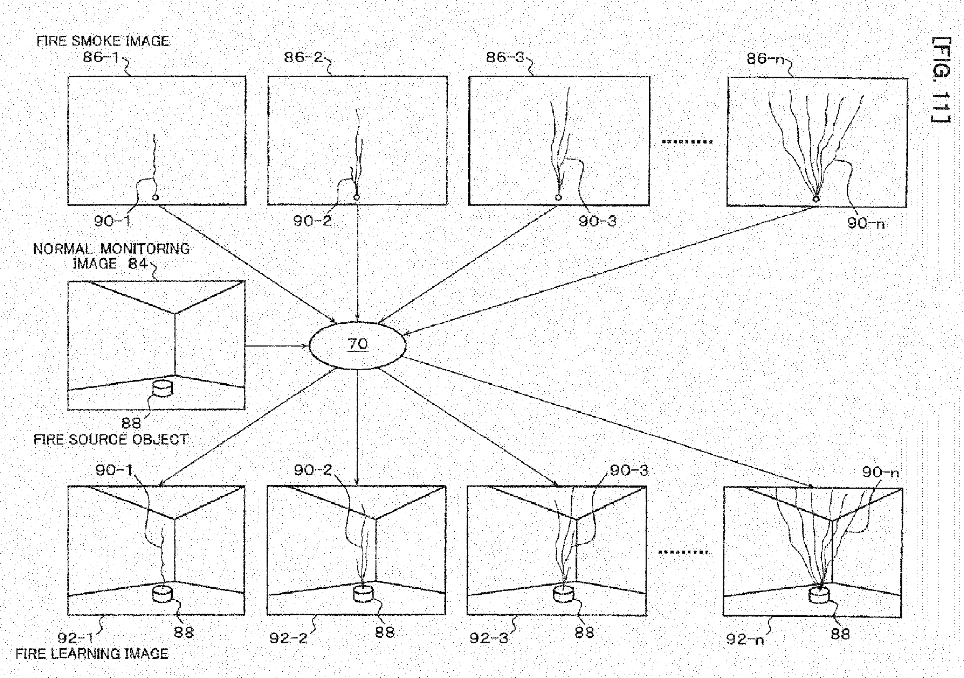

FIG. 11 is an explanatory view showing one example of a learning image generation process by a learning image generation device of FIG. 10, and referring to FIG. 11, explanation of learning image generation control for manually selecting a fire source object and its material by the learning image generation part 70 of FIG. 10 is given as follows.

When a learning image generation control process is started by predetermined operations of the operation part 80, a normal monitoring image 84 shown in FIG. 11 is displayed on the monitor part 82. From the normal monitoring image 84 displayed on the monitor part 82, the operator selects an object that might cause a fire generation source, such as, for example, a dust bin, as a fire source object 88 by a cursor operation or the like using a mouse, and also opens a dialog or the like for the material of the fire source object 88, and selects one of them. Moreover, of the images displayed on the monitor part 82, with respect to selection candidates of the fire source object, highlighted display, such as surrounding frames or the like, may be used.

When the fire source object 88 and its material in the normal monitoring image 84 are selected by a manual operation of the operator, the learning image generation control part 70 successively reads out fire smoke images 86-1 to 86-n that vary in time series and are stored in the fire smoke image storage part 74 in association with the materials for the fire source object 88, and composes smokes 90-1 to 90-n therein with the normal monitoring image 84 to generate fire learning images 92-1 to 92-n that vary in time series and stores them in the learning image storage part 78.

In this case, the composing process of the fire smoke images 86-1 to 86-n relative to the normal monitoring image 84 by the learning image generation control part 70 are carried out while making the smoke generation points of smokes 90-1 to 90-n coincident with the fire source object 88 selected by the manual operation. Moreover, by using the normal monitoring image 84 as a background image, the learning image generation control part 70 composes images in a manner so as to overwrite smoke 90-1 to 90-n extracted from the fire smoke images 86-1 to 86-n.

The generation of the fire learning image by the learning image generation control part 70 is carried out in the same manner on the generation of the non-fire learning image. The operator displays the normal monitoring image 84 on the monitor device 82 by the operation of the operation part 80, and, for example, in the case when a non-fire smoke generation source exists in the normal monitoring image 84, selects a non-fire generation source, such as, for example, a cooking pan, or the like, by a cursor operation or the like by a mouse, and also opens a dialog or the like, so as to select a cooking pan, as the type of the non-fire smoke generation source. Moreover, of the images displayed on the monitor part, with respect to the selection candidates for the non-fire smoke generation source, highlighted display, such as surrounding frame or the like, may be carried out.

In this manner, when non-fire smoke generation source and its type in the normal monitoring image 84 are selected by the manual operation of the operator in this manner, the learning image generation control part 70 successively reads out cooking steam images that vary in time series and are stored in the non-fire smoke image storage part 76 in association with the cooking pan that is a type of non-fire smoke generation sources, and composes these with the normal monitoring image 84 to generate non-fire learning images that vary in time series to be stored in the learning image storage part 78.

In this case also, the composing process of the cooking steam image as the non-fire smoke image relative to the normal monitoring image 84 by the learning image generation control part 70 is carried out by overwriting the cooking steam image on the non-fire smoke generation source selected by the manual operation, with its steam generation point being coincident therewith.

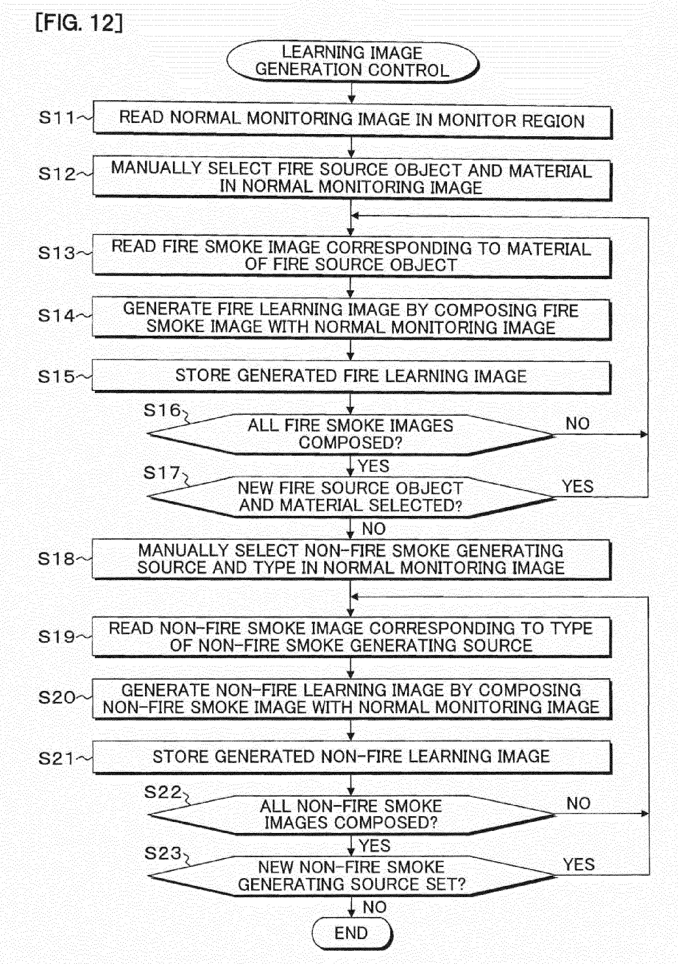

FIG. 12 is a flow chart showing learning image generation control for generating a learning image by manual detection of the fire source object, and this is controlled by the learning image generation control part 70 shown in FIG. 10.

As shown in FIG. 12, in the case when the learning image generation control is started by a predetermined operation, the learning image generation control part 70 reads out a normal monitoring image captured by the monitor camera 16 in step S11 and stored in the normal monitoring image storage part 72, and screen-displays the image on the monitor part 82, and in step S12, detects the fire source object and its material manually selected in the normal monitor screen.

Successively, the sequenceproceeds to step S13, and the learning image generation control part 70 reads out a fire smoke image corresponding to the material for the selected fire source object, for example, a fire smoke image that varies in time series, from the fire smoke image storage part 74, and in step S14, composes the smoke generation point of the fire smoke image so as to be positioned on the fire source object of the normal monitoring image to generate a fire learning image, and allows the learning image storage part 78 to store the image in step S15.

Successively, in step S16, the learning image generation control part 70 determines whether or not all the fire smoke images have been composed, and if all the fire smoke images have not been composed, repeats processes from step S13. If determined that all the fire images have been composed in step S16, the sequence proceeds to step S17, and the normal monitoring image is displayed on the monitor part 82 so that the operator is allowed to select a new fire source object and its material, and if the new fire source object and the selection of its material are determined, the sequence of processes from step S13 are repeated, while if no selection of a new fire source object and its material is made, the sequence proceeds to step S18.

In step S18, the learning image generation control part 70 displays a normal monitoring image on the monitor part 82, and allows the operator to select a non-fire smoke generation source and its type. Successively, the sequence proceeds to step S19, and the learning image generation control part 70 reads out a non-fire smoke image corresponding to the type of the non-fire smoke generation source selected by the manual operation, for example, a non-fire smoke image that varies in time series, from the non-fire smoke image storage part 76, and in step S20, composes the non-fire smoke image with the non-fire smoke generation source of the normal monitoring image, with its generation point being positioned therewith, to generate a non-fire learning image, and stores the image in the learning image storage part 78 in step S21.

Successively, in step S22, the learning image generation control part 70 determines whether or not all the non-fire smoke images have been composed, and if all the non-fire smoke images have not been composed, repeats processes from step S19.

If determined that all the non-fire smoke images have been composed in step S22, the sequence proceeds to step S23, the learning image generation control part 70 displays the normal monitoring image on the monitor part 82 so that the operator is allowed to select the non-fire smoke source object and its type, if selection of a new non-fire smoke source object and its type from the normal monitoring image are determined, the sequence of processes from step S19 are repeated, while if no selection of a new non-fire smoke source object and its type is made, the sequence of processes are completed, and informs the learning control part 30 of the determination device 10 of the generation completion of the learning images, and subjects the multi-layer-type neural network 34 to learning.

### (Learning Image Generation Control for automatically detecting Fire Source Object and Material)

Referring to FIG. 10, explanation of learning image generation control for automatically detecting a fire source object and its material by the learning image generation control part 70 is given as follows.

When a learning image generation control process is started by predetermined operations of the operation part 80, a normal monitoring image 84 shown in FIG. 4 is displayed on the monitor part 82, and from the normal monitoring image 84, the learning image generation control part 70 detects an object that might cause a fire generation source, such as, for example, a dust bin, as a fire source object 88, and also detects the material for the fire source object 88.

The detection of the fire source object 88 of the normal monitoring image 84 by the learning image generation control part 70 can be realized, for example, by utilizing R-CNN (Regions with Convolutional Neural Network) known as a detection method of an object matter (Object) using a neural network.

The detection of the fire source object by R-CNN is carried out by the following sequence of processes.
(1) Cut out a region that is assumed to be a fire source object (Object) from the normal monitoring image.
(2) Input the cut out region to a convolutional neural network so as to extract the amount of characteristics.
(3) Determine by using SVM (Support Vector Machine) whether or not it is a fire source object (dust bin, ashtray, heating appliance, electrical outlet or the like) by using the extracted amount of characteristics.

Additionally, the convolutional neural network is prepared for each of the fire source object, such as the dust bin, ashtray, heating appliance, electrical outlet or the like, and each of them is preliminarily subjected learning by using large number of learning images.

In this manner, the same processes as those of the aforementioned manual selection are carried out except that a fire source object and its material are automatically detected from the normal monitoring image so that fire learning images are generated.

Moreover, with respect to the generation of non-fire learning images also, the learning image generation control part 70 detects a non-fire smoke generation source and its type from the normal monitoring image 48 by using R-CNN, and the same processes as those of the aforementioned manual selection are carried out thereon so as to generate non-fire learning images.

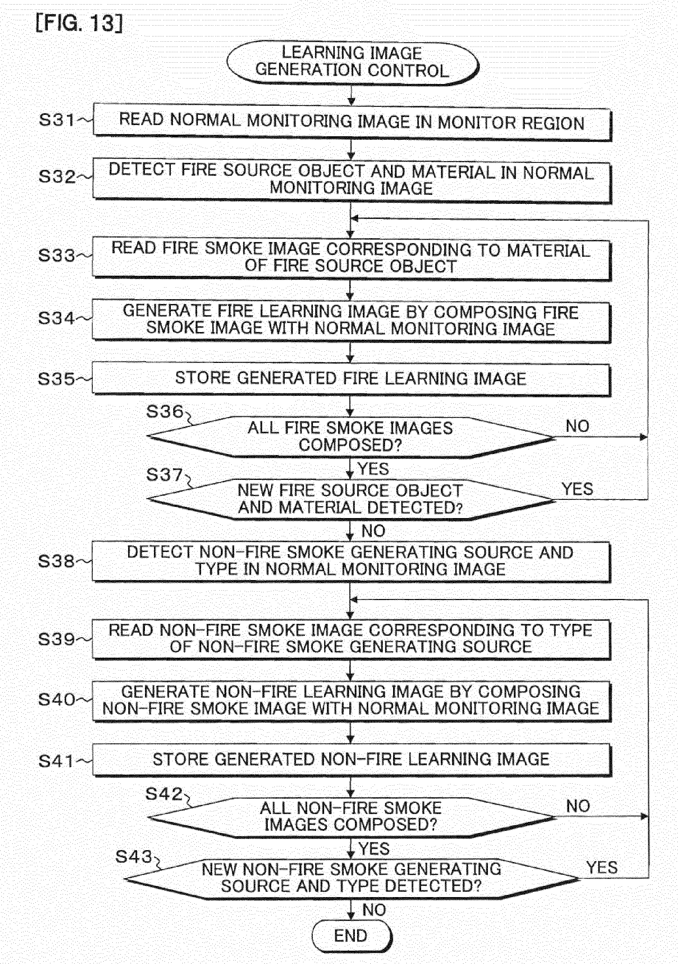

FIG. 13 is a flow chart that shows learning image generation control for generating learning images by detecting the fire source object automatically, and the control is carried out by the learning image generation control part 70 shown in FIG. 10.

As shown in FIG. 13, when the learning image generation control is started by predetermined operations, the learning image generation control part 70 reads out a normal monitoring image captured by the monitor camera 16 and stored in the normal monitoring image storage part 72 in step S31, and screen-displays this on the monitor part 82 so that in step S32, a fire source object and its material are automatically detect from the normal monitor screen by the R-CNN or the like.

Successively, the sequence proceeds to step S33, and it reads out a fire smoke image corresponding to the material for the automatically detected fire source object, for example, a fire smoke image that varies in time series, from the fire smoke image storage part 74, and in step S34, composes the smoke generation point of the fire smoke image so as to be positioned with the fire source object of the normal monitoring image to generate a fire learning image, and allows the learning image storage part 78 to store the image in step S78.

Successively, in step S36, it determines whether or not all the fire smoke images have been composed, and if all the fire smoke images have not been composed, it repeats processes from step S33. If determined that all the fire smoke images have been composed in step S36, the sequence proceeds to step S37, and the presence/absence of the automatic detection of a new fire source object and its material in the normal monitoring image is determined, and when the detection of a new fire source object and its material is found, the processes from the step S33 are repeated, and when no detection of a new fire source object and its material are found, the sequence proceeds to step S38.

In step S38, the learning image generation control part 70 automatically detects a non-fire generation source and its type in the normal monitoring image by using R-CNN or the like. Successively, the sequence proceeds to step S39, and the learning image generation control part 70 reads out a non-fire smoke image corresponding to the type of the non-fire smoke generation source thus detected, for example, a non-fire smoke image that varies in time series, from the learning image storage part 78, and in step S40, composes the generation point of non-fire smoke image so as to be coincident with the non-fire smoke generation source of the normal monitoring image to generate a non-fire learning image, and stores the image in the learning image storage part 78 in step S41.

Successively, in step S42, the learning image generation control part 70 determines whether or not all the non-fire smoke images have been composed, and if all the non-fire smoke images have not been composed, repeats processes from step S39. If determined that all the non-fire smoke images have been composed in step S42, the sequence proceeds to step S43, and the learning image generation control part 70 determines the presence/absence of the detection of a new non-fire smoke generation source and its type in the normal monitoring image, and if the detection of a new non-fire generation source and its type is found, the processes from step S39 are repeated, and if no detection of a new non-fire generation source and its type is found, the sequence of processes are completed, and informs the learning control part 30 of the determination device 10 of the generation completion of learning images and subjects the multi-layer-type neural network 34 to learning.

### [Fire Monitoring System in cooperation with Server]

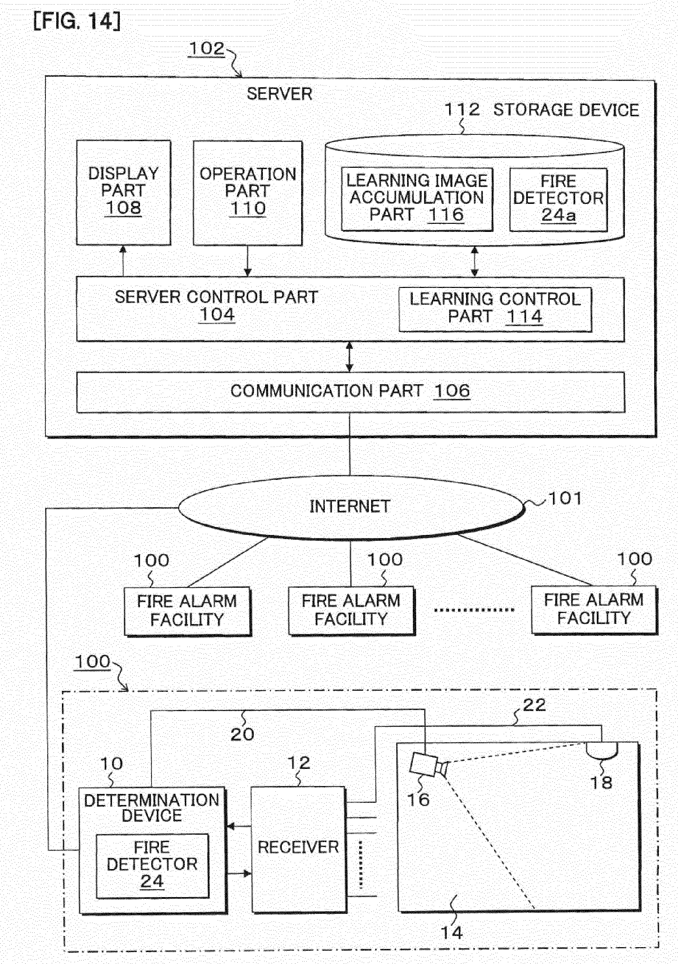

FIG. 14 is an explanatory view that schematically shows a fire monitoring system that is provided with a determination device subjected to learning by the server and monitors a fire by a monitor camera and a fire sensor.

As shown in FIG. 14, in a plurality of monitoring target facilities, such as buildings or the like, fire alarm facilities 100 are installed, and the plural fire alarm facilities 100 are connected to a server 102 through the Internet 101.

### (Outline of Fire Alarm Facility)

When typically exemplified one of the fire alarm facilities 100, it includes a monitor camera 16 and a fire sensor 18 that are installed in a monitor region 14, and the monitor camera 16 is connected to a determination device 10 provided with a fire detector 24 constituted by a multi-layer-type neural network through a signal cable 20, and the fire sensor 18 is connected to a fire receiver 12 through a sensor line 22.

The configurations and functions of the determination device 10 and the fire receiver 12 are basically the same as those of the determination device 10 and the fire receiver 12 shown in FIG. 1; however, the determination device 10 is further provided with a communication function with a server 102.

Based upon fire monitor results derived from a fire transfer informing signal, a fire decision transfer informing signal and a recovery transfer informing signal outputted from the receiver 12, the monitor region, the determination device 10 reads out motion images in the monitor region 14 captured by the monitor camera 16 up to the output of a fire warning recorded in a recording device from the recording device, and these images are uploaded to the server 102 as fire learning images or non-fire learning images, and a multi-layer-type neural network installed on the server 102 side is subjected to learning, and the multi-layer-type neural network that has been subjected to learning is downloaded from the server 102 so as to allow the multi-layer-type neural network installed in the fire detector 24 to be updated.

### (Functional Configuration of Server)

As shown in FIG. 14, the server 102 is provided with a server control part 104, a communication part 106, a display part 108, an operation part 110 and a storage device 112. The server control part 104 has a function that is realized, for example, by execution of a program, and as hardware, a computer line and the like provided with a CPU, a memory, various input/output ports including AD conversion ports, etc. are used

The communication part 106 transmits/ receives various information and signals to/from the server control part 28 and fire alarm facility 100 side via Internet 101 through TCP/IP protocol.

The display part 108 is a liquid crystal display, or the like, and the operation part 110 includes a keyboard, a mouse, a touch panel installed on a liquid crystal display, etc. The storage device 112 is constituted by a memory, a hard disc or the like.

The server control part 104 is provided with a learning control part 114 as a function that is realized by execution of a program. Moreover, the storage device 112 stores a function of a fire detector 24a constituted by a multi-layer-type neural network that is a learning target of the learning control part 114. The multi-layer-type neural network of the fire detector 24a stored in the storage device 112 has the same configuration as the multi-layer-type neural network of the fire detector 24 installed in the determination device 10 of the fire alarm facility 100, and the multi-layer-type neural network subjected to learning is downloaded to the fire alarm facility 100, and operated as the multi-layer-type neural network of the fire detector 24.

Moreover, the storage device 112 is provided with a learning image accumulation part 116 in which learning images to be used for learning of the multi-layer-type neural network of the fire detector 24a are stored, and learning images uploaded from the determination devices 10 of the plural fire alarm facilities 100 are stored therein.

The server control part 104 carries out control for storing learning images uploaded by a learning image collecting function installed in the determination device 1 of the fire alarm facility 100 in the learning image accumulation part 116 of the storage device 112.

Moreover, at appropriate timings, such as by a predetermined operation, lapse of predetermined cycle, or at the time when a learning image is uploaded from the fire alarm facility 100 side, the server control part 104 reads out learning images stored in the learning image storage part 112, and develops the fire detector 24a having a multi-layer-type neural network having the same configuration as that of the fire detector 24 installed in the determination device 10 of the fire alarm facility 100 on the memory, and by inputting a large number of fire learning images and non-fire learning images to the multi-layer-type neural network as supervised images, it is subjected to learning repeatedly, for example, by a learning method, such as a back propagation method, with weighting and bias being altered, and an application program of the multi-layer-type neural network subjected to the learning is downloaded to the fire detector 24 installed in the determination device 10 of each of all the fire alarm facilities 100 through the Internet 101, so that a control process for updating the application program of the multi-layer-type neural network of the fire detector 24 is carried out.

### [Determination Device]

### (Functional Configuration of Determination Device)

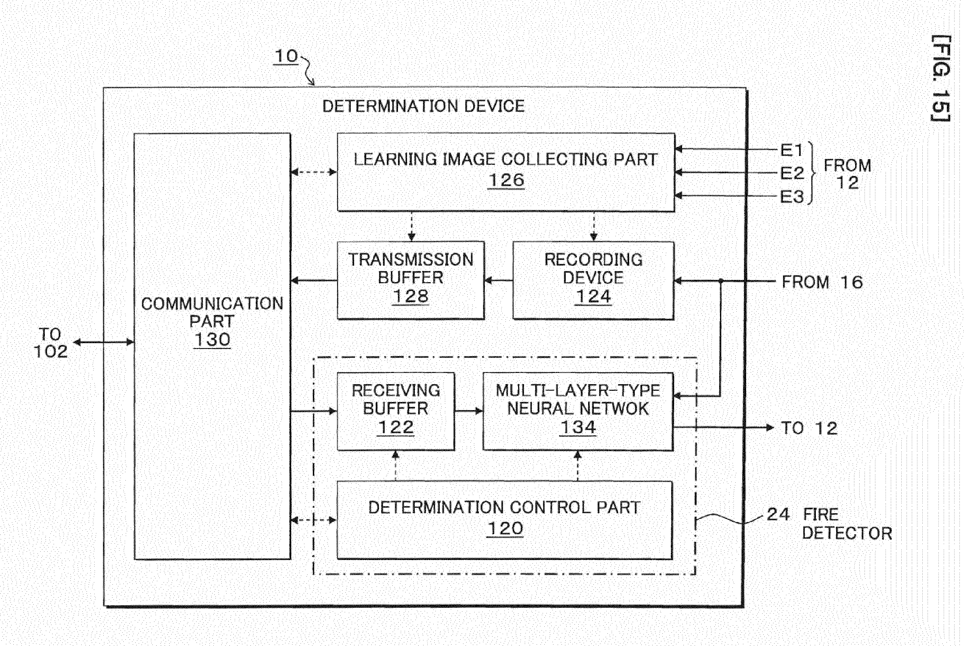

FIG. 15 is an explanatory view showing a functional configuration of a determination device using a multi-layer-type neural network for estimating a fire from images captured by a monitor camera.

As shown in FIG. 15, the determination device 10 is provided with a fire detector 24, and the fire detector 24 is provided with a determination control part 120, a receiver buffer 122 and a multi-layer-type neural network 34 that functions as a fire recognition part. Moreover, in the determination device 10, a recording device 124 serving as a storage part, a learning information collecting part 126, a transmission buffer 128 and a communication part 130. In this case, functions of the determination control part 120, the multi-layer- type neural network 34 and the learning information collecting part 126 are realized by execution of a program by a computer line CPU corresponding to the process of the neural network.

The recording device 124 records motion images in the monitor region captured by the monitor camera 16, and recorded motion images can be partially read out by a reproduction instruction given from the outside.

### (Learning Information Collecting Part)

In the case when a fire transfer informing signal E1 is inputted based upon a fire alarm of the fire sensor 18 by the receiver 12 and a fire warning is outputted, and a fire is confirmed by a site confirmation by an administrator or the like, and based upon this, a fire decision transfer informing signal E2 is inputted by a fire decision operation in the receiver 12, the learning information collecting part 126 carries out control in which images in the monitor region are read, for example, before predetermined time, such as 5 minutes before, to the time at which the fire transfer informing signal E1 is inputted, from the recording device 48 and the images are stored in the transmission buffer 122, and by instructing the communication part 130, the images stored in the transmission buffer 52 are read out as fire learning images so as to be uploaded to the server 102 through the internet 101.

In this case, supposing that the record images are recorded in the recording device 124 as motion images of 30 frames/second, a large number of fire learning images, such as 9000 sheets, are obtained from recorded images of 5 minutes. Moreover, in the case when fire images are generated from the motion images of 5 minutes, since a change between the frame images corresponding to a cycle of 1/30 second is very small, for example, the frame images thinned by a 1 second cycle may be used as learning images. In this case, a large number of fire learning images, such as 300 sheets, can be obtained from motion images of 5 minutes.

In the learning information collectingpart 126, in the case when after a fire transfer informing signal E1 has been inputted based upon fire alarm of the fire sensor 18 by the receiver 12, a non-fire state is confirmed by the site confirmation by an administrator or the like, a recovery operation is carried out by the receiver 12 and a recovery transfer informing signal E3 is inputted based upon the recovery operation; therefore, in this case, the learning information collecting part 126 carries out control in which images in the monitor region are read, for example, before predetermined time, such as 5 minutes before, to the time at which the fire transfer informing signal E1 is inputted, from the recording device 124 and the images are stored in the transmission buffer 128, and by instructing the communication part 130, the images stored in the transmission buffer 128 are read out as non-fire learning images so as to be uploaded to the server 102 through the internet 101.

In this case also, supposing that the record images are recorded in the recording device 124 as motion images of 30 frames/second, a large number of non-fire images, such as 9000 sheets, are obtained from the record images of 5 minutes. Moreover, in the case when non-fire images are generated from the motion images of 5 minutes, since a change between the frame images corresponds to a cycle of 1/30 second is very small, the frame images thinned, for example, by a 1 second cycle, may be used as learning images. In this case, a large number of non-fire learning images, such as 300 sheets, can be obtained from the motion image of 5 minutes.

### (Determination Control Part)

In the case when the multi-layer-type neural network that has been subjected to learning is downloaded to the receiver buffer 122 from the server 102 through the communication part 130, the decision control part 120 carries out such control as to update the multi-layer-type neural network 34 to the multi-layer-type neural network that has been subjected to learning downloaded to the receiver buffer 122.

Moreover, by inputting images in the monitor region 14 captured by the monitor camera 16 to the multi-layer-type neural network 34, the determination control part 120 estimates whether it is a fire or a non-fire state, and carries out control in which when the estimation result of a fire is obtained, it outputs a fire decision signal to the receiver 12 so as to output, for example, a fire sign warning indicating a sign of a fire.

Moreover, by installing a monitor device in the determination device 10 and upon determination of a fire, the image in the monitor region in which the fire is determined and which is being monitored by the monitor camera 16 may be screen-displayed so as to allow an administrator or a person in charge of disaster prevention who has noticed the fire sign warning to carry out fire confirmation. In this case, a fire decision switch may be installed on the operation part of the determination device 10, and when upon confirmation of a fire from the monitor image, the fire decision switch is operated, in the same manner as in the case of a transmitter is operated relative to the receiver 12 of the fire alarm facility, a fire informing signal may be outputted so that a fire warning is outputted from the receiver 12.

### [Collecting Control Operation of Learning Image]

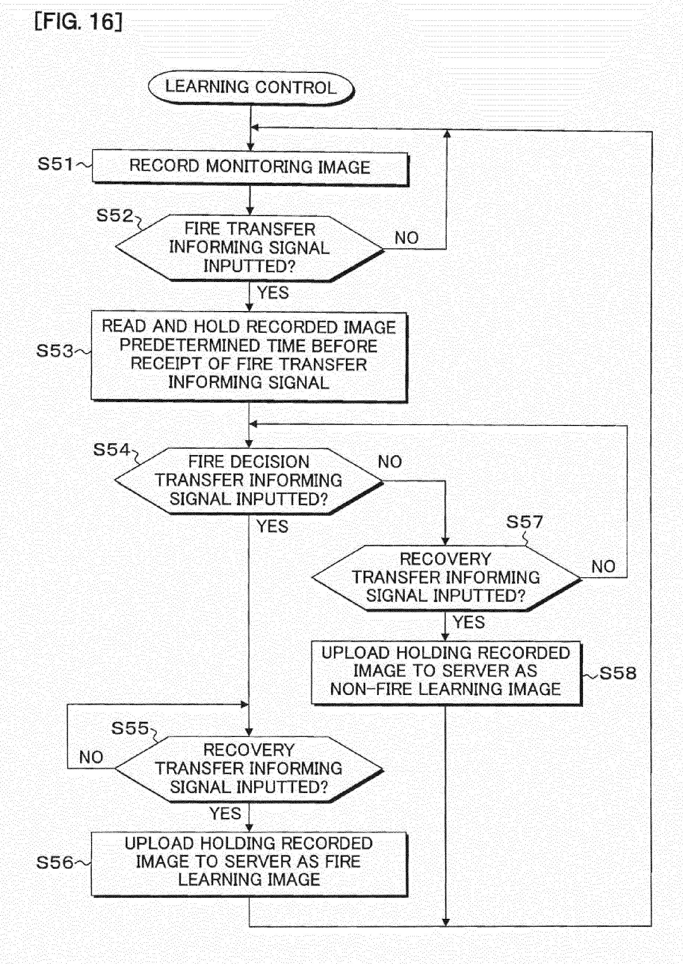

FIG. 16 is a flow chart showing learning image collecting control for collecting learning images in cooperation with the fire monitoring of the receiver by the learning information collecting part of FIG. 15, and for updating the images to the server.

As shown in FIG.16, in step S51, the learning information collecting part 126 allows the recording device 124 to record motion images from the monitor camera 16 installed in the monitor region, and when the input of the fire transfer informing signal E1 from the receiver 12 is recognized in step S52, the sequence proceeds to step S53 so that recorded images from predetermined time before are read out from the recording device 124 so as to be held on the transmission buffer 128.

Successively, the sequence proceeds to step S54, and when the input of the fire decision transfer informing signal E2 from the receiver 12 is recognized by the learning information collecting part 126, the sequence proceeds to step S55, and thereafter, when the input of the recovery transfer informing signal E3 from the receiver 12 is recognized, the sequence proceeds to step S56 so that recorded images corresponding to predetermined period of time held in the transmission buffer 128 are read out so as to be updated to the server 102 through the Internet 101 as fire learning images.

On the other hand, in the learning information collecting part 126, without determination of an input of a fire decision transfer informing signal E2 in step S54, while determining the presence/absence of an input of a recovery transfer informing signal E3 in step S57, when an input of a recovery transfer informing signal E3 is determined in step S57, the sequence proceeds to S58, and recorded images corresponding to predetermined period of time held in the transmission buffer 128 are read out, and the images are uploaded to the server 102 as non-fire learning images through the Internet 101.

### [Collection of Learning Image by Monitoring Image from Exceeding Fire Sign Level]

### (Collection of Fire Image Learning)

As another embodiment of learning control by the learning information collection part 126 of the determination device shown in FIG. 15, in the case when an analog fire sensor is installed in a warning section and by detecting a temperature or a smoke concentration by the analog fire sensor and by sending the detected analog value to the receiver 12 so as to determine a fire, images from the time when a fire sign is determined to the time when a fire is determined are read out from the recording device 124 and stored in the transmission buffer 128, and then uploaded to the server 102 as fire learning images through the internet 101.

With respect to the fire sign level, as shown in FIG. 5, in the case when the temperature that is being detected by the fire sensor is raised as time elapses due to a fire that occurred at time t0, images recorded during time T from time t1 at which the temperature has reached a fire sign level TH1 that is lower than a fire determination level TH2 to time t2 at which it has reached the fire determination level TH2 are stored in the transmission buffer 128 as fire learning images, and then uploaded to the server 102 as fire learning images through the Internet 101.

All the images recorded during time T are images related to the fire and no non-fire images are included; therefore, by uploading these to the server 102 through the Internet 101 as fire learning images and inputting to the multi-layer-type neural network of the fire detector 24a, learning is carried out by back propagation so that accuracy for recognizing a fire from input images can be positively improved.

More specifically, in the learning information collection part 126 of the determination device 10 shown in FIG. 15, when the detected analog value of the temperature or smoke concentration from analog fire sensor from the receiver 12 has reached the predetermined fire sign level TH1, a sign warning is outputted, and successively, when the detected analog value has reached the fire level TH2, a fire transfer informing signal based upon a fire alarm is inputted so that a fire warning is outputted and a fire is confirmed by a site confirmation by an administrator or the like, and when based upon this, a fire decision transfer informing signal E2 based upon a fire decision operation of the receiver 12 is inputted thereto, images in the monitor region from the time at which a fire sign is detected to the time at which the fire transfer informing signal is inputted, are read out from the recording device 48, and stored in the transmission buffer 128, and by uploading these to the server 102 as fire learning images through the Internet 101, and then inputting the images to the multi-layer-type neural network of the fire detector 24a so that learning is carried out by back propagation.

### (Collection of Non-Fire Image Learning)

Moreover, in the learning information collecting part 126, when the detected analog value of the temperature or smoke concentration from analog fire sensor from the receiver 12 has reached the predetermined fire sign level TH1, a sign warning is outputted, and successively, when the detected analog value has reached the fire level TH2, a fire transfer informing signal E1 based upon a fire alarm is inputted thereto so that a fire warning is outputted and in the case when a non-fire state is confirmed by a site confirmation by an administrator or the like, a recovery operation is carried out in the receiver 12, and a recovery transfer informing signal E3 based upon the recovery operation is inputted thereto. Thus, images in the monitor region from the time at which a fire sign is detected to the time at which the fire transfer informing signal E1 is inputted, are read out from the recording device 124, and stored in the transmission buffer 128, and by uploading these to the server 102 as non-fire learning images through the Internet 101, and then inputting the images to the multi-layer-type neural network of the fire detector 24a so that learning is carried out by back propagation.

### [Fire Monitoring System for monitoring fire by Sensor]

### (Outline of Fire Monitoring System)

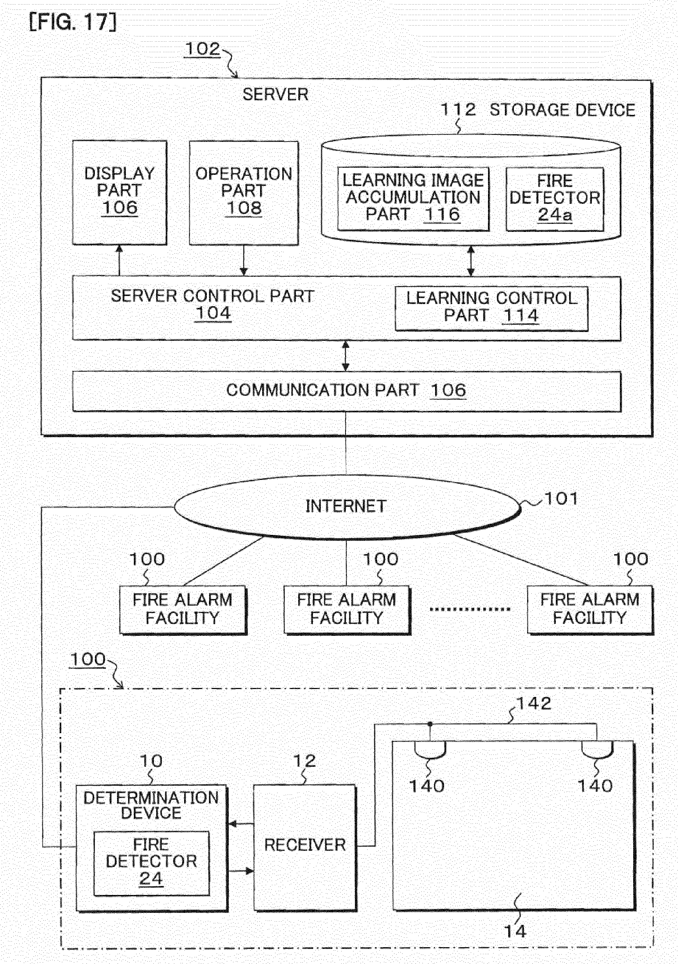

FIG. 17 is an explanatory view that schematically shows a fire monitoring system for monitoring a fire by using an analog fire sensor in which a fire detector that is subjected to learning by a server and functions as a sensor is installed.

As shown in FIG. 17, in a plurality of monitoring target facilities such as buildings or the like, fire alarm facilities 100 are installed, and a plurality of fire alarm facilities 100 are connected to a server 102 through the Internet 101.

An analog fire sensor 140 functioning as a sensor is installed in a monitor region 14 of each of the fire alarming facilities 100, and connected to a transmission path 142 drawn from the receiver 12, so as to allow serial data transmission.

The analog fire sensor 140 detects smoke concentration from a smoke detecting part, and outputs a smoke concentration detection signal, and by transmission of a batch AD conversion command from the receiver 12, periodically carries out A/D conversion thereon so as to to be stored in the memory as smoke concentration data, and also transmits smoke concentration data relative to polling from the receiver 12 which has specified a sensor address, and when the smoke concentration exceeds a predetermined threshold value level, makes determination as a fire, and transmits a fire interrupt signal to the receiver 12 so as to output a fire warning. Additionally, the analog fire sensor 140 may detect the temperature, CO concentration or the like in addition to the smoke concentration.

The determination device 10 is provided with a fire detector 24 constituted by a multi-layer-type neural network, and smoke concentration data detected by the analog fire sensor 140 is inputted through the receiver 12 and stored in the storage part as input information from the sensor.

Upon receipt of the fire interrupt signal of the analog fire sensor 140, the receiver 12 outputs a fire warning and also outputs the fire transfer informing signal to the fire detector 14. When the fire warning is outputted from the receiver 12, an administrator or a person in charge of fire prevention goes out to the installation site of the analog fire sensor 140 that has given the warning, and confirm the presence/absence of a fire, and in the case when a fire is confirmed, the receiver 12 carries out the fire decision operation. When the fire decision operation is carried out in the receiver 12, a region sound warning that has been temporarily stopped is released so that a fire decision transfer informing signal is outputted to the determination device 10.

Moreover, in the case of a non-fire state in the site confirmation relative to the fire warning, after removing the reason for the non-fire state, a recovery operation is carried out in the receiver 12 so that the fire warning state is released to return to a normal monitoring state. In this manner, in the case when, after the output of the fire warning in the receiver 12, a fire recovery operation is carried out without carrying out the fire decision operation, a recovery transfer informing signal is outputted from the receiver 12 to the determination device 10.

Based upon fire monitor results by the fire transfer informing signal, the fire decision transfer informing signal and the recovery transfer informing signal outputted from the receiver 12, the determination device 10 generates, time series data from the smoke concentration data detected by the analog fire detector 140 of the monitor region 14 up to the output of the fire warning stored in the storage part; thus, by uploading these to the server 102 through the Internet 101 as learning information and subjecting the multi-layer-type neural network of the fire detector 24a installed on the server 102 side to learning, and the multi-layer-type neural network that has been subjected to learning is downloaded from the server 102 so as to allow the multi-layer-type neural network of the fire detector 24 installed in the determination device 10 to be updated. The configuration and functions of the determination device 10 are basically the same as those of the determination device 10 shown in FIG. 15.

### (Fire Detector)

The multi-layer-type neural network installed in the fire detector 24 is only limited to a total bond neural network constituting the recognition part 40 shown in FIG. 3(A), and the convolutional neural network constituting the characteristic extraction part 38 is excluded.

The learning information collecting part 126 stores smoke concentration data detected by the analog fire detector 140 through the receiver 12 in the storage part. The smoke concentration data stored in the storage part of the learning information collecting part 126 forms, for example, data that show changes in smoke concentration that vary as time elapses, as shown in FIG. 8.

The smoke concentration data of FIG. 8 shows one example of time-based changes in smoke concentration caused by a fire, and at time t0, the smoke concentration starts to rise to reach a pre- alarm level TH1 at time t1, and then, reaches a fire level TH2 at time t2 to output a fire warning so as to carry out the fire decision operation.

When based upon the fire transfer informing signal E1, fire decision transfer signal E2 and recovery transfer informing signal E3 from the receiver 12 and a fire warning is outputted from the receiver 12, the learning information collecting part 126 generates time-series data based upon sensor data of smoke concentration shown in FIG. 8 stored in the storage part, and stores the data in the transmission buffer 128, and then instructs the communication part 130 so as to read out the time- series data stored in the transmission buffer 128 as fire learning data; thus, by uploading these to the server 102 through the Internet 101 as learning information and subjecting the multi-layer-type neural network of the fire detector 24a installed on the server 102 side to learning, and the multi-layer-type neural network that has been subjected to learning is downloaded from the server 102 so as to allow the multi-layer-type neural network 34 of the fire detector 24 installed in the determination device 10 to be updated.

The generation of the time-series data by the learning information collecting part 126 is carried out as follows: Supposing that smoke concentration data are SM1 to SM18 for each predetermined unit of time Δt from time t0 to time t1 at which the pre-alarm level TH1 has been reached, for example, as shown in FIG. 8, time series data (SM1 to SM10), (SM2 to SM11), ...(SM9 to SM18) are generated for each cycle T1, T2, ...T9 corresponding to a predetermined time, while shifting per predetermined unit of time Δt, and the resulting data is stored in the storage part.

For example, when the learning by the time-series data (SM1 to SM10) is exemplified, the learning of the multi-layer-type neural network of the fire detector 24a by using time-series data (SM1 to SM10), (SM2 to SM11), ...(SM9 to SM18) uploaded to the server 102 is carried out by inputting the concentration vales SM1 to SM10 to the input layer of the multi-layer-type neural network in parallel with one another. Thereafter, with respect to the rest of the time-series data (SM2 to SM11), ... (SM9 to SM18), the learning is carried out in the same manner by successively inputting the data into the input layer in parallel with one another.

Moreover, in the case when after a fire transfer informing signal E1 has been inputted based upon a fire alarm of the analog fire sensor 140 by the receiver 12, a non-fire state is confirmed by a site confirmation by an administrator or the like, since a recovery operation is carried out by the receiver 12, and a recovery transfer informing signal E3 is inputted based upon the recovery operation, the learning information collecting part 126 generates non-fire time-series data in the same manner as in the case of the fire time-series data shown in FIG. 8, and uploads the data to the server 102 through the Internet 101 so as to subject the multi-layer-type neural network of the fire detector 24a installed on the server 102 side to learning, and then downloads the multi-layer-type neural network that has been subjected to the learning from the server 102 so that the multi-layer-type neural network 34 of the fire detector 24 installed in the determination device 10 is updated.

After updating the multi-layer-type neural network 34 of the fire detector 24, time-series data corresponding to predetermined period of time is generated for each predetermined unit of time Δt, and by inputting the data to the multi-layer-type neural network 34, fire is monitored.

### [Modified Example of Present Invention]

### (Clarifying Fire Determination Basis)

In the above-mentioned embodiment, the determination result as to the presence/absence of a fire is informed; however, in addition to this, the reason by which a fire is determined may be displayed. For example, in the case of monitoring by a camera image, an image on which a fire is determined is displayed and with respect to a region whose contribution to fire determination is high, a highlighted display is given. Thus, with respect to a region which is determined by the fire detector as a fire, visual confirmation can be easily made, and it becomes possible to easily determine whether or not a fire actually occurs, and consequently to support determination corresponding to the circumstance.

### (Arson Monitor)

The above-mentioned embodiment has exemplified a configuration in which fire monitoring in a warning region is carried out; however, in addition to this, another not claimed configuration is proposed in which a fire detector constituted by a multi-layer-type neural network is installed in an arson monitoring system that uses sensors, such as outdoor monitor cameras, flame detectors, or the like, and by subjecting the fire detector to learning by deep learning, arson may be monitored.

### (Characteristic Extraction)

In the aforementioned embodiment, by inputting images to a convolutional neural network, characteristics of a fire are extracted; however, without using the convolutional neural network, a pre-treatment may be carried out so as to extract predetermined characteristics, such as contour, graduations, or the like, from the inputted images, and by inputting the image whose characteristics are extracted to a total bond neural network that functions as a recognition part, fire or non-fire state may be estimated. Thus, a processing load for characteristic extraction of images can be reduced.

### (Concerning Learning Method)

The aforementioned embodiment performs learning by back propagation; however, the learning method of the multi-layer-type neural network is not intended to be limited by this.

### (Composition between Image and Sensor)

In the above-mentioned embodiments, fire monitoring by images and fire monitoring by sensors are separated as different modes; however, image data and sensor data may be dealt in parallel with each other as input information. With respect to the image data, for example, black/white values per 1 pixel may be dealt as input term, and with respect to the sensor data, for example, a detected value for each sensor is dealt as input term. In this case, the term of an intermediate layer where the characteristic extraction of the image is carried out in the intermediate layer and the term of the intermediate layer that is influenced by the sensor data are preferably made to give influences to the term of the intermediate layer of the next stage and thereafter for use in determining the fire detection as the results of learning.

### (Infrared Ray Illumination and Image Capturing of Infrared-Ray Image)

In the aforementioned embodiment, the monitor region is image-captured by a monitor camera in a state where illumination of the monitor region is used and/or in a state where natural light is used; however, by applying infrared ray to the monitor region from an infrared ray illumination device, an infrared-ray image is captured by using a monitor camera having sensitivity to the infrared-ray region, and by subjecting the multi-layer-type neural network of the determination device to learning by back propagation and by inputting the infrared-ray image in the monitor region to the multi-layer-type neural network, a fire or a non-fire state may be determined.

In this manner, by inputting the infrared ray image in the monitor region to the determination device, a fire monitoring process using monitoring images can be carried out without being influenced by the illumination state in the monitor region and a change in brightness in day and night, or the like.

### (Image Composition other than Smoke)

In the above-mentioned embodiment, learning is carried out by composing a smoke image; however, according to not claimed alternatives, by using objects other than smoke, for example, a flame image or a heat source image taken by an infrared camera, learning may be carried out.

### (Learning of Actual Fire)

In the above-mentioned embodiments, a fire state is reproduced for learning; however, in addition to this, learning may be carried out by using an image in an actual fire state. Moreover, with respect to weights at the time of learning of the fire detector, learning by the use of fire reproduction and learning by the use of an actual fire state may be made different. By making the weight of learning by the use of an actual fire state larger, learning results can be appropriately given on an actual fire having a small frequency of occurrence.

### (Concerning Storing Method of Normal Monitoring Image)

In the above-mentioned embodiments, images in the monitor region captured in a normal monitor state are used as normal monitoring images; however, images in the monitor region images.

Thus, the shipment can be carried out, with the fire detection performance in the monitor region being confirmed.

### (Concerning Generation of Fire Learning Image and Non-Fire Learning Image)

In the aforementioned embodiments, by composing a fire smoke image or a non-fire smoke image with the normal monitor image, a fire learning image or a non-fire learning image is generated .

For example, smoke images may be generated by CG with respect to the normal monitoring image. Moreover, by configuring the monitor region by three-dimensional data, simulation in which smoke is generated may be carried out on the three-dimensional data so that the three-dimensional space formed by using a point at which a camera is actually disposed as a viewing point is visualized; thus, a fire smoke image or a non-fire smoke image may be generated.

### (Detection of Abnormality)

In the above-mentioned embodiments, detection of a fire and learning of a fire are carried out; however, in alternatives that are not claimed, detection of abnormalities, such as theft, illegal actions, intrusion or the like, and learning of abnormalities may be carried out. For example, in the case of theft, a state in which a security object is lost is learned as abnormality, in the case of illegal actions, characteristic states, such as a sit-in state of a person is learned as abnormality, and in the case of intrusion, a state of a group of intruded people is learned as abnormality. The state of abnormality may be formed by composing images, or may be generated by using CG. Moreover, by configuring the monitor region as three-dimensional data, simulation for generation of abnormality on the three-dimensional data is performed, and the three-dimensional space configured by using a point where a monitor camera is placed as a viewing point may be formed into images.

### (Performance Confirmation of Fire Detector)

In addition to the aforementioned embodiments, the detection precision of a fire detector may be tested. By the present application, the image in a fire state prepared can be used for confirmation of the detection accuracy of a fire.

### (Sharing of Input Information)

In the above-mentioned present embodiment, learning of a fire detector is carried out based upon input information; however, learning may be carried out by using input information derived from another input information acquiring terminal within the same system. For example, captured images from a monitor camera corresponding to a certain fire detector may be used as input information of another fire detector so as to carry out learning.

### (UpdatebyDownloadingofMulti-Layer- Type Neural Network subjected to Learning)

An updating process of a neural network in the present embodiment, which is carried out by downloading the multi-layer-type neural network subjected to learning, is performed by downloading the application program of a multi-layer-type neural network subjected to learning; however, since what are altered by the learning are weighting and bias of the network, by extracting the weighting and bias values that have been subjected to learning, and also by downloading these values on the fire alarm facility side, the weighting and bias value of the multi-layer-type neural network installed on the fire alarm facility side may be updated.

Furthermore, by taking a difference between the old program prior to the learning and the new program subjected to the learning so as to be downloaded, and by also updating the old program by the difference, the weighting and bias value subjected to learning are substantially extracted so that by downloading these to the fire alarm facility side, the weighting and bias value of the multi-layer-type neural network installed on the fire alarm facility side can be updated.

### (Learning customized for each Fire Alarm Facility)

The learning of the multi-layer-type neural network by using learning images collected from a plurality of fire alarm facilities on the server in the present embodiment is carried out as follows: collected learning images are classified for each of the fire alarm facilities, and accumulated, or classified into a plurality of groups of fire alarm facilities having the similar warning sections, and accumulated, and in accordance with the classified fire alarm facilities or fire alarm facility groups, multi-layer-type neural networks are prepared on the server side, and by subjecting them to learning by using corresponding learning images, and these may be downloaded to the determination device of the fire alarm facilities corresponding to the multi-layer-type neural network subjected to learning.

### (Collection and Distribution of Learning Data by Server)

The aforementioned embodiment is designed to carry out learning in the server; however, the server may be used for storing input information, and each of the abnormality detectors may be designed to download the input information stored in the server so as to be subjected to learning.

### (Learning in Similar Environments)

In each of cases of learning in the server and of learning in the fire detector, by using input information of fire detectors having similar environments in a monitor object, learning on the multi-layer-type neural network may be carried out. Environments for monitor objects are stored in the server, and managements are carried out as to input information of which fire detector is used for learning information of which fire detector. The environment of a monitor object may be registered by a user or the environment may be specified by initializing learning of a fire detector, and by categorizing the specified environment, the time-consuming tasks may be advantageously omitted.

Moreover, based upon cases of a fire occurred under similar environments, among monitor regions, any object that might cause a fire may be informed and warned. For example, in the case when, in a normal state, a video image in the monitor camera is displayed on a monitor screen in a guard room, upon occurrence of a fire in a similar environment, the object forming the generation source of the fire can be highlighted in display. Thus, upon occurrence of an actual fire, the cause of the fire can be estimated easily, and countermeasures for preventing the fire from expanding can be preliminarily taken.

### (Theft Monitoring)

In the aforementioned embodiment, fire monitoring has been exemplified; however, a not claimed alternative may be applied to theft monitoring. In the case of theft monitoring, with respect to the monitoring system using the monitor camera 16 as shown in FIG. 1, FIG. 9 and FIG. 14, the receiver 12 may be set to a theft receiver, and the fire sensor 18 may be set to a theft detector.

### (Illegal Action Monitoring)

Moreover, another not claimed alternative may be applied to preliminary detection for illegal action. By learning movements of a person who is trying to do an illegal action, such as theft, arson or the like, for example, frequently looking around, or the like, so as to detect abnormality prior to the illegal action, warning is outputted. As a method for outputting warning, for example, on monitor screens or the like in a guard room for monitoring monitor cameras, images on the monitor cameras may be displayed so that the corresponding parsons are displayed, for example, with a red frame or the like being placed so as to surround each of them.

With respect movements leading to illegal actions, those are not peculiar to specific sites, but common movements in similar environments or common movements all over the world, therefore, those movements can be effectively learned in the present invention in which learning is carried out based upon input information under a plurality of environments to be stored in the server. Furthermore, another effect can be expected in which common actions leading to illegal actions that have not yet been clarified can be found.

### (Cooperation with Room Entry/Exit System)

Moreover, in cooperation with a room entry/exit system a not claimed alternative may be applied to a monitoring system against abnormal intrusion or the like. In the room entry/exit system, as to whether or not a target person can come in/go out of a room, determination is made by, for example, a card, finger print, or the like. However, in the room entry/exit system, a problem, such as "tailgating" or the like, in which following someone who can enter a room, even a person who should not enter the room can enter, tends to occur. With respect to illegal actions, such as the above-mentioned tailgating or the like, the present invention may be applied so as to learn or detect abnormality, with camera images and information about the room entry/exit system being used as input. Since the present application makes it possible to download the abnormality detector subjected to learning in the server so as to be utilized as an abnormality detector at the actual site, even an illegal action newly generated in another place can be learned and properly dealt with.

### Description of Reference Numerals

10, 10-1, 10-2: determination device
12: receiver
14, 14-1, 14-2: monitor region
16, 16-1, 16-2: monitor camera
18, 18-1, 18-2: fire sensor
20, 20-1, 20-2: signal cable
22: sensor line
24: 24a, fire detector
26: recording device
28: learning image holding part
30: learning control part
32: image input part
34: multi-layer-type neural network
36: determination part
38: characteristic extraction part
40: recognition part
42: input image
43, 45a, 45b: weighting filter
44a, 44b, 44c: characteristic map
46: input layer
48: total bond
50: intermediate layer
52: output layer
60: analog fire sensor
62: transmission path
64: time-series data generation part
66: time-series data input part
68: learning data holding part
70: learning image generation control part
72: normal monitor image storage part
74: fire smoke image storage part
76: non-fire smoke image storage part
78: learning image storage part
80: operation part
82: monitor part
84: normal monitoring image
86-1 to 86-n: fire smoke image
90-1 to 90-n: smoke
88: fire source object
92-1 to 92-n: fire learning image
100: fire alarm facility
101: Internet
114: learning control part
116: learning image accumulation part
120: determination control part
122: receiver buffer
124: recording device
126: learning information collecting part
128: transmission buffer
130: communication part

## Claims

1. A fire monitoring system comprising:
a fire detector (24) constituted by a multi-layer-type neural network (34) for detecting a fire based upon input information,
a learning control part (30) for subjecting the fire detector (24) to learning by deep learning,
a normal monitoring image storage part (72) for storing an image captured in a normal monitoring state in a monitor region as a normal monitoring image (84),
a learning image generation control part (70) for generating an image of a fire outbreak in a monitoring region as a fire learning image (92-1 - 92-n) based upon the normal monitoring image (84), and
a fire smoke image storage part (74) for storing a fire smoke image (86-1 - 86-n) preliminarily generated;
wherein the learning image generation control part (70) detects one or a plurality of fire source objects (88) contained in the normal monitoring image (84), and generates the fire learning image (92-1 - 92-n) by composing the fire generation point of the fire smoke image (86-1 - 86-n) so as to be positioned at the detected fire source object (88),
wherein the learning control part (30) inputs the fire learning image (92-1 - 92-n) generated by the learning image generation control part (70) into the fire detector (24) so as to be subjected to learning by deep learning.

2. The fire monitoring system according to claim 1,
wherein the fire smoke image storage part (74) stores a plurality of the fire smoke images (86-1 - 86-n) that vary in time series, and the learning image generation control part (70) respectively compose the plural fire smoke images (86-1 - 86-n) that vary in time series with the normal monitoring image (84) to generate a plurality of the fire learning images that vary in time series.

3. The fire monitoring system according to claim 1,
wherein the learning image generation control part (70) generates the fire learning image (92-1 - 92-n) that is composed so as to make the smoke generation point of the fire smoke image (86-1 - 86-n) coincident with the fire source object (88) selected by a manual operation in the normal monitoring image (84).

4. The fire monitoring system according to claim 3,
wherein the fire smoke image storage part (74) stores a plurality kinds of fire smoke images (86-1 - 86-n) whose smoke kinds are different in association with the material of the fire source object (88), and the learning image generation control part (70) generates the fire learning image (92-1 - 92-n) by composing the fire smoke image (86-1 - 86-n) of smoke type corresponding to the specified material based upon a selection operation of the material for the fire source object (88) with the normal monitoring image (84).

5. The fire monitoring system according to claim 1,
wherein the fire smoke image storage part (74) stores a plurality kinds of fire smoke images (86-1 - 86-n) whose smoke kinds are different in association with material of the fire source object (88), and the learning image generation control part (70) detects the material of the fire source object (88), and generates the fire learning image (92-1 - 92-n) by composing the fire smoke image (86-1 - 86-n) of smoke type corresponding to the detected material with the normal monitoring image (84).

6. The fire monitoring system according to claim 1 or claim 3,
wherein the learning image generation control part (70) generates the fire learning image (92-1 - 92-n) by controlling the size and/or angle of the fire smoke image (86-1- 86-n) to be composed in accordance with the position of the fire source object (88).

7. The fire monitoring system according to claim 1,
wherein the learning image generation control part (70) further generates an image at the time of a non-fire state in the monitor region as a non-fire learning image based upon the normal monitoring image, and the learning control part (30) inputs the non-fire learning image generated by the learning image generation control part (70) into the fire detector (24) so as to be subjected to learning by deep learning.

8. The fire monitoring system according to claim 7, further comprising:
a non-fire smoke image storage part (76) for storing a non-fire smoke image preliminarily generated,
wherein the learning image generation control part (70) generates the non-fire learning image by composing the non-fire smoke image with the normal monitoring image (84).

9. The fire monitoring system according to claim 8,
wherein the non-fire smoke image storage part (76) stores at least any one of a cooking steam image caused by cooking, a cooking smoke image caused by cooking, a smoking image caused by smoking and an illumination lighting image caused by lighting of an illumination equipment, and the learning image generation control part (70) generates the non-fire learning image by composing a cooking steam image, a cooking smoke image, a smoking image and/or an illumination lighting image with the normal monitoring image (84).

10. The fire monitoring system according to claim 8,
wherein the non-fire smoke image storage part (76) stores at least any of a plurality of the cooking steam images, cooking smoke images and smoking images that vary in time series, and the learning image generation control part (70) generates the non-fire learning image by composing the cooking steam images, cooking smoke images and/or smoking images that vary in time series with the normal monitoring image (84).

11. The fire monitoring system according to claim 8,
wherein the learning image generation control part (70) generates the non-fire learning image by controlling the size and/or angle of the non-fire smoke image to be composed in accordance with a position of the composing end of the non-fire smoke image.

## Patentansprüche

1. Ein Brandüberwachungssystem, aufweisend:
einen Branddetektor (24), der aus einem mehrschichtigen neuronalen Netzwerk (34) besteht, um auf der Grundlage von Eingangsinformationen einen Brand erkennen zu können;
einen Lernsteuerteil (30), um den Branddetektor (24) durch mehrschichtiges Lernen einem Lernprozess zu unterziehen;
einen Speicherteil (72) für ein normales Überwachungsbild zum Speichern eines in einem normalen Überwachungszustand in einem Überwachungsbereich aufgenommenen Bildes als ein normales Überwachungsbild (84);
einen Lernbilderzeugungs-Steuerteil (70) zum Erzeugen eines Bildes eines Brandausbruchs in einem Überwachungsbereich als ein Brand-Lernbild (92-1 - 92-n) auf der Grundlage des normalen Überwachungsbildes und
einen Brand-Rauchbild-Speicherteil (74) zum Speichern eines vorläufig erzeugten Brand-Rauchbildes (86-1 - 86-n);
wobei der Lernbilderzeugungs-Steuerteil (70) ein oder mehrere in dem normalen Überwachungsbild (84) enthaltene Brandherd-Objekte (88) erfasst und das Brand-Lernbild (92-1 - 92-n) durch Kombinieren des Brandherdes des Brand-Rauchbildes (86-1 - 86-n) so erzeugt, dass dieser an der Stelle des erfassten Brandherd-Objektes (88) positioniert ist,
wobei der Lernsteuerteil (30) das durch den Lernbilderzeugungs-Steuerteil (70) erzeugte Brand-Lernbild (92-1 - 92-n) in den Branddetektor (24) eingibt, um diesen mehrschichtigem Lernen zu unterziehen.

2. Das Brandüberwachungssystem nach Anspruch 1,
wobei der Brand-Rauchbild-Speicherteil (74) eine Mehrzahl an in Zeitreihen variierende Brand-Rauchbilder (86-1 - 86-n) speichert, wobei der Lernbilderzeugungs-Steuerteil (70) jeweils die mehreren in Zeitreihen variierenden Brand-Rauchbilder (86-1 - 86-n) mit dem normalen Überwachungsbild (84) kombiniert, um eine Mehrzahl der in Zeitreihen variierenden Brand-Lernbilder zu erzeugen.

3. Das Brandüberwachungssystem nach Anspruch 1,
wobei der Lernbilderzeugungs-Steuerteil (70) das Brand-Lernbild (92-1 - 92-n) erzeugt, welches so kombiniert ist, dass der Brandherd des Brand-Rauchbildes (86-1 - 86-n) mit dem in dem normalen Überwachungsbild (84) manuell ausgewählten Brandherd-Objekt (88) übereinstimmt.

4. Das Brandüberwachungssystem nach Anspruch 3,
wobei der Brand-Rauchbild-Speicherteil (74) eine Mehrzahl an Arten von Brand-Rauchbildern (86-1 - 86-n) speichert, deren Raucharten dem Material des Brandherd-Objektes (88) entsprechend unterschiedlich sind, und der Lernbilderzeugungs-Steuerteil (70) das Brand-Lernbild (92-1 - 92-n) dadurch erzeugt, dass er das Brand-Rauchbild (86-1 - 86-n) der dem spezifizierten Material entsprechenden Rauchart, auf der Grundlage einer Materialauswahl für das Brandherd-Objekt (88), mit dem normalen Überwachungsbild (84) kombiniert.

5. Das Brandüberwachungssystem nach Anspruch 1,
wobei der Brand-Rauchbild-Speicherteil (74) eine Mehrzahl an Arten von Brand-Rauchbildern (86-1 - 86-n) speichert, deren Raucharten dem Material des Brandherd-Objektes (88) entsprechend unterschiedlich sind, und der Lernbilderzeugungs-Steuerteil (70) das Material des Brandherd-Objektes (88) erfasst und das Brand-Lernbild (92-1 - 92-n) dadurch erzeugt, dass er das Brand-Rauchbild (86-1 - 86-n) der dem ermittelten Material entsprechenden Rauchart mit dem normalen Überwachungsbild (84) kombiniert.

6. Das Brandüberwachungssystem nach Anspruch 1 oder Anspruch 3, wobei der Lernbilderzeugungs-Steuerteil (70) das Brand-Lernbild (92-1 - 92-n) dadurch erzeugt, dass er die Größe und/oder den Winkel des zu kombinierenden Brand-Rauchbildes (86-1 - 86-n) entsprechend der Position des Brandherd-Objektes (88) steuert.

7. Das Brandüberwachungssystem nach Anspruch 1,
wobei der Lernbilderzeugungs-Steuerteil (70) ferner, auf der Grundlage des normalen Überwachungsbildes zum Zeitpunkt eines Nicht-Brand-Zustandes in der Überwachungsregion, ein Bild als ein Nicht-Brand-Lernbild erzeugt, wobei der Lernsteuerteil (30) das von dem Lernbilderzeugungs-Steuerteil (70) erzeugte Nicht-Brand-Lernbild in den Branddetektor (24) eingibt, um diesen mehrschichtigem Lernen zu unterziehen.

8. Das Brandüberwachungssystem nach Anspruch 7, ferner aufweisend:
einen Nicht-Brand-Rauchbild-Speicherteil (76) zum Speichern eines zuvor erzeugten Nicht-Brand-Rauchbildes, wobei der Lernbilderzeugungs-Steuerteil (70) das Nicht-Brand-Lernbild durch Kombinieren des Nicht-Brand-Rauchbildes mit dem normalen Überwachungsbild (84) erzeugt.

9. Das Brandüberwachungssystem nach Anspruch 8,
wobei der Nicht-Brand-Rauchbild-Speicherteil (76) ein durch Kochen verursachtes Koch-Dampfbild und/oder ein durch Kochen verursachtes Koch-Rauchbild und/oder ein durch Rauchen verursachtes Rauchbild und/oder ein durch die Beleuchtung einer Beleuchtungseinrichtung verursachtes Beleuchtungsbild, speichert, wobei der Lernbilderzeugungs-Steuerteil (70) das Nicht-Brand-Lernbild dadurch erzeugt, dass er ein Koch-Dampfbild, ein Koch-Rauchbild, ein Rauchbild und/oder ein Beleuchtungsbild mit dem normalen Überwachungsbild (84) kombiniert.

10. Das Brandüberwachungssystem nach Anspruch 8,
wobei der Nicht-Brand-Rauchbild-Speicherteil (76) zumindest eines aus einer Mehrzahl an in Zeitreihen variierender Koch-Dampfbildern, Koch-Rauchbildern und Rauchbildern speichert, und der Lernbilderzeugungs-Steuerteil (70) das Nicht-Brand-Lernbild dadurch erzeugt, dass er die in Zeitreihen variierenden Kochdampfbilder, Kochrauchbilder und/oder Rauchbilder mit dem normalen Überwachungsbild kombiniert.

11. Das Brandüberwachungssystem nach Anspruch 8,
wobei der Lernbilderzeugungs-Steuerteil (70) das Nicht-Brand-Lernbild dadurch erzeugt, dass er die Größe und/oder den Winkel des zu kombinierenden Nicht-Brand-Rauchbildes entsprechend der Position am Ende des Kombinierens des Nicht-Brand-Rauchbildes steuert.

## Revendications

1. Un système de surveillance d'incendie comportant :
un détecteur d'incendie (24) constitué d'un réseau neuronal de type multicouche (34) pour détecter un incendie sur la base d'informations d'entrée,
une partie de commande d'apprentissage (30) pour soumettre le détecteur d'incendie (24) à un apprentissage par apprentissage profond,
une partie de stockage d'image de surveillance normale (72) pour stocker une image capturée dans un état de surveillance normale dans une zone de moniteur comme une image de surveillance normale (84),
une partie de commande de génération d'image d'apprentissage (70) pour générer une image d'un début d'incendie dans une zone de moniteur comme une image d'apprentissage d'incendie (92-1 - 92-n) basée sur l'image de surveillance normale (84), et
une partie de stockage d'image de fumée d'incendie (74) pour stocker une image de fumée d'incendie (86-1 - 86-n) générée de façon préliminaire ;
dans lequel la partie de commande de génération d'image d'apprentissage (70) détecte un objet ou une pluralité d'objets de source d'incendie (88) contenus dans l'image de surveillance normale (84), et génère l'image d'apprentissage d'incendie (92-1 - 92-n) en composant le point de génération d'incendie de l'image de fumée d'incendie (86-1 - 86-n) de manière à la positionner sur l'objet de source d'incendie (88) détecté,
dans lequel la partie de commande d'apprentissage (30) applique en entrée l'image d'apprentissage d'incendie (92-1 - 92-n) générée par la partie de commande de génération d'image d'apprentissage (70) dans le détecteur d'incendie (24) de manière à la soumettre à un apprentissage par apprentissage profond.

2. Le système de surveillance d'incendie selon la revendication 1,
dans lequel la partie de stockage d'image de fumée d'incendie (74) stocke une pluralité des images de fumée d'incendie (86-1 - 86-n) qui varient selon une série chronologique, et la partie de commande de génération d'image d'apprentissage (70) composent respectivement la pluralité d'images de fumée d'incendie (86-1 - 86-n) qui varient selon une série chronologique avec l'image de surveillance normale (84) pour générer une pluralité d'images d'apprentissage d'incendie qui varient selon une série chronologique.

3. Le système de surveillance d'incendie selon la revendication 1,
dans lequel la partie de commande de génération d'image d'apprentissage (70) génère l'image d'apprentissage d'incendie (92- 1 - 92-n) qui est composée de manière à faire coïncider le point de génération de fumée de l'image de fumée d'incendie (86-1 - 86-n) avec l'objet de source d'incendie (88) sélectionné par une opération manuelle dans l'image de surveillance normale (84).

4. Le système de surveillance d'incendie selon la revendication 3,
dans lequel la partie de stockage d'image de fumée d'incendie (74) stocke une pluralité de types d'images de fumée d'incendie (86-1 - 86-n) dont les types de fumée sont différents en association avec le matériau de l'objet de source d'incendie (88), et la partie de commande de génération d'image d'apprentissage (70) génère l'image d'apprentissage d'incendie (92-1 - 92-n) en composant l'image de fumée d'incendie (86-1 - 86-n) de type de fumée correspondant au matériau spécifié sur la base d'une opération de sélection du matériau pour l'objet de source d'incendie (88) avec l'image de surveillance normale (84).

5. Le système de surveillance d'incendie selon la revendication 1,
dans lequel la partie de stockage d'image de fumée d'incendie (74) stocke une pluralité de types d'images de fumée d'incendie (86-1 - 86-n) dont les types de fumée sont différents en association avec un matériau de l'objet de source d'incendie (88), et la partie de commande de génération d'image d'apprentissage (70) détecte le matériau de l'objet de source d'incendie (88), et génère l'image d'apprentissage d'incendie (92-1 - 92-n) en composant l'image de fumée d'incendie (86-1 - 86-n) de type de fumée correspondant au matériau détecté avec l'image de surveillance normale (84).

6. Le système de surveillance d'incendie selon la revendication 1 ou la revendication 3,
dans lequel la partie de commande de génération d'image d'apprentissage (70) génère l'image d'apprentissage d'incendie (92- 1 - 92-n) en commandant la taille et/ou l'angle de l'image de fumée d'incendie (86-1 - 86-n) à composer en fonction de la position de l'objet de source d'incendie (88).

7. Le système de surveillance d'incendie selon la revendication 1,
dans lequel la partie de commande de génération d'image d'apprentissage (70) génère en outre une image au moment d'un état sans incendie dans la zone de moniteur comme une image d'apprentissage sans incendie basée sur l'image de surveillance normale, et la partie de commande d'apprentissage (30) applique en entrée l'image d'apprentissage sans incendie générée par la partie de commande de génération d'image d'apprentissage (70) dans le détecteur d'incendie (24) de manière à la soumettre à un apprentissage par apprentissage profond.

8. Le système de surveillance d'incendie selon la revendication 7, comportant en outre :
une partie de stockage d'image de fumée sans incendie (76) pour stocker une image de fumée sans incendie générée de façon préliminaire,
dans lequel la partie de commande de génération d'image d'apprentissage (70) génère l'image d'apprentissage sans incendie en composant l'image de fumée sans incendie avec l'image de surveillance normale (84).

9. Le système de surveillance d'incendie selon la revendication 8,
dans lequel la partie de stockage d'image de fumée sans incendie (76) stocke au moins un élément quelconque parmi une image de vapeur de cuisson causée par une cuisson, une image de fumée de cuisson causée par une cuisson, une image de fumée causée par une fumée et une image de lumière d'éclairage causée par l'éclairage d'un équipement d'éclairage, et la partie de commande de génération d'image d'apprentissage (70) génère l'image d'apprentissage sans incendie en composant une image de vapeur de cuisson, une image de fumée de cuisson, une image de fumée et/ou une image de lumière d'éclairage avec l'image de surveillance normale (84).

10. Le système de surveillance d'incendie selon la revendication 8,
dans lequel la partie de stockage d'image de fumée sans incendie (76) stocke au moins un élément quelconque parmi une pluralité des images de vapeur de cuisson, des images de fumée de cuisson et des images de fumée qui varient selon une série chronologique, et la partie de commande de génération d'image d'apprentissage (70) génère l'image d'apprentissage sans incendie en composant les images de vapeur de cuisson, les images de fumée de cuisson et/ou les images de fumée qui varient selon une série chronologique avec l'image de surveillance normale (84).

11. Le système de surveillance d'incendie selon la revendication 8,
dans lequel la partie de commande de génération d'image d'apprentissage (70) génère l'image d'apprentissage sans incendie en commandant la taille et/ou l'angle de l'image de fumée sans incendie à composer en fonction d'une position de la fin de composition de l'image de fumée sans incendie.
